# EUROPEAN PATENT APPLICATION

(11) **EP 4 422 315 A1**
(43) Date of publication of application: **28.08.2024**
(21) Application number: 22891931.2
(22) Date of filing: 07.11.2022
(51) Int. Cl.: H04W 72/04

(54) **COMMUNICATION METHOD AND APPARATUS**

(30) Priority: 09.11.2021 CN 202111318502; 07.12.2021 CN 202111511839
(71) Applicant: Huawei Technologies Co., Ltd., Shenzhen, Guangdong 518129 (CN)
(72) Inventor: XUE, Yifan, Shenzhen, Guangdong 518129 (CN); KUANG, Yiru, Shenzhen, Guangdong 518129 (CN); XUE, Lixia, Shenzhen, Guangdong 518129 (CN); XU, Haibo, Shenzhen, Guangdong 518129 (CN); LI, Qiang, Shenzhen, Guangdong 518129 (CN)
(74) Representative: Grünecker Patent- und Rechtsanwälte PartG mbB
(86) International application number: PCT/CN2022/130325
(87) International publication number: WO 2023/083137

(57) **Abstract**

A communication method and apparatus are provided, to reduce paging overheads generated in a process of paging a terminal device. After determining a first identifier, a first access network device sends, to a first terminal device, a paging message including the first identifier, so that the terminal device determines, based on the first identifier, that the terminal device is paged. The first identifier is used to identify the paged first terminal device, and a bit length of the first identifier is less than a bit length of a 5G-S-TMSI or an I-RNTI. Because the bit length of the first identifier is less than the bit length of the 5G-S-TMSI or the I-RNTI, compared with a current method in which the 5G-S-TMSI or the I-RNTI is directly used to identify a paged terminal device, a bit length of an identifier is reduced, thereby reducing signaling overheads.

## Description

### CROSS-REFERENCE TO RELATED APPLICATIONS

This application claims priority to Chinese Patent Application No. 202111318502.5, filed with the China National Intellectual Property Administration on November 9, 2021 and entitled "WUR FORMAT DESIGN METHOD", which is incorporated herein by reference in its entirety; and this application claims priority to Chinese Patent Application No. 202111511839.8, filed with the China National Intellectual Property Administration on December 7, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A terminal device in an idle (IDLE) state or an inactive (INACTIVE) state receives a paging message to be woken up. The paging message includes an identifier of the terminal device, to indicate, by using the identifier of the terminal device, that the terminal device is paged.

Currently, in a scenario in which a terminal device in an IDLE state is paged, an identifier of the terminal device included in a paging message is a 48-bit 5th generation-system-temporary subscriber identity (5th Generation-system-temporary mobile subscriber identity, 5G-S-TMSI) allocated by a core network device. In a scenario in which a terminal device in an INACTIVE state is paged, an identifier of the terminal device included in a paging message is a 40-bit radio network temporary identity (radio network temporary identity, I-RNTI) allocated by an access network device.

However, overheads are relatively large when the foregoing method is used to page a terminal device.

### SUMMARY

This application provides a communication method and apparatus, to reduce paging overheads generated in a process of paging a terminal device.

According to a first aspect, this application provides a communication method. The method may include: A first terminal device receives a paging message from a first access network device, where the paging message includes a first identifier, and the first identifier is used to identify the paged first terminal device; and the first terminal device determines, based on the first identifier, that the first terminal device is paged, where a bit length of the first identifier is less than a bit length of a second identifier, and the second identifier is a 5th generation-system-temporary subscriber identity 5G-S-TMSI or a radio network temporary identity I-RNTI.

According to the foregoing method, because the bit length of the first identifier is less than a bit length of the 5G-S-TMSI or the I-RNTI, compared with a current method in which the 5G-S-TMSI or the I-RNTI is directly used to identify a paged terminal device, a bit length of an identifier is reduced, thereby reducing signaling overheads.

In a possible design, when the first terminal device is in an IDLE state, the first identifier is allocated by a core network device to the first terminal device; and when the first terminal device is in an INACTIVE state, the first identifier is allocated by the core network device. In this way, the core network device can allocate a new identifier different from the 5G-S-TMSI to the first terminal device.

In a possible design, when the first terminal device is in an INACTIVE state, the first identifier is allocated by the first access network device to the first terminal device, or the first identifier is allocated by a second access network device to the first terminal device. In this way, the first access network device or the second access network device can allocate a new identifier different from the I-RNTI to the first terminal device.

In a possible design, the first identifier may be some bits of a 5th generation-temporary subscriber identity (5th generation-temporary mobile subscriber identification, 5G-TMSI) in the 5G-S-TMSI. In this way, the bit length of the first identifier can be less than a bit length of the 5G-S-TMSI.

In a possible design, that the first identifier is some bits of the 5G-TMSI in the 5G-S-TMSI may include the following several manners: The first identifier is the last A bits of the 5G-TMSI; the first identifier is the first B bits of the 5G-TMSI; or the first identifier is C bits selected from the 5G-TMSI according to a preset rule, where A, B, and C are positive integers less than a quantity of bits of the 5G-TMSI. In this way, the first identifier can be flexibly obtained based on some bits of the 5G-TMSI.

In a possible design, the bit length of the first identifier is less than 32.

In a possible design, the bit length of the first identifier is greater than or equal to 12 and less than or equal to 24.

In a possible design, the paging message is a first wake-up radio (wake-up radio, WUR). In this way, the first terminal device can receive the paging message by using a WUR link, thereby reducing power consumption of the first terminal device.

In a possible design, the first WUR further includes first indication information, and the first indication information indicates the bit length of the first identifier, a paging type corresponding to the paging message, or a format of the first WUR. In this way, the first terminal device can accurately identify the paging type and the like based on the first indication information.

In a possible design, that the first indication information indicates a format of the first WUR may include: the first indication information indicates that the first WUR includes the first identifier; and that the first indication information indicates a paging type corresponding to the paging message may include: the first indication information indicates core network paging or access network paging.

In a possible design, a method for receiving, by the first terminal device, the paging message from the first access network device may be: The first terminal device receives the paging message from the first access network device by using a first frequency resource. Further, after the first terminal device determines, based on the first indication information, that the first terminal device is paged, the first terminal device may send a random access preamble sequence (preamble) to the first access network device by using a second frequency domain resource, where the second frequency domain resource is different from the first frequency resource. In this way, the first terminal device no longer needs to receive a conventional paging message, and power consumption can be reduced.

In a possible design, the paging message further includes a third identifier, and the third identifier is used to identify a paged second terminal device. In this way, a plurality of different terminal devices can be paged by using one paging message.

According to a second aspect, this application provides a communication method. The method may include: After determining a first identifier, a first access network device sends a paging message to a first terminal device, where the paging message includes the first identifier, the first identifier is used to identify the paged first terminal device, a bit length of the first identifier is less than a bit length of a second identifier, and the second identifier is a 5G-S-TMSI or an I-RNTI.

According to the foregoing method, because the bit length of the first identifier is less than a bit length of the 5G-S-TMSI or the I-RNTI, compared with a current method in which the 5G-S-TMSI or the I-RNTI is directly used to identify a paged terminal device, a bit length of an identifier is reduced, thereby reducing signaling overheads.

In a possible design, when the first terminal device is in an IDLE state, a method for determining, by the first access network device, the first identifier may be: The first access network device receives the first identifier from a core network device, where the first identifier is allocated by the core network device to the first terminal device. When the first terminal device is in an INACTIVE state, a method for determining, by the first access network device, the first identifier may be: The first access network device receives the first identifier from the core network device, where the first identifier is allocated by the core network device to the first terminal device; or the first access network device receives the first identifier from a second access network device, where the first identifier is allocated by the core network device to the first terminal device. In this way, the core network device can allocate a new identifier different from the 5G-S-TMSI to the first terminal device.

In a possible design, when the first terminal device is in the IDLE state, the first access network device further receives the 5G-S-TMSI from the core network device, where the first identifier corresponds to the 5G-S-TMSI, and the bit length of the first identifier is less than a bit length of the 5G-S-TMSI; and when the first terminal device is in the INACTIVE state, the first access network device further receives the 5G-S-TMSI from the core network device, or the first access network device receives the 5G-S-TMSI from the second access network device, where the first identifier corresponds to the 5G-S-TMSI, and the bit length of the first identifier is less than the bit length of the 5G-S-TMSI. In this way, the first access network device can identify a correspondence between the first identifier and the 5G-S-TMSI.

In a possible design, when the first terminal device is in an INACTIVE state, a method for determining, by the first access network device, the first identifier may be: The first access network device receives the first identifier from a second access network device, where the first identifier is allocated by the second access network device to the first terminal device; or the first access network device allocates the first identifier to the first terminal device. In this way, the first access network device or the second access network device can allocate a new identifier different from the I-RNTI to the first terminal device.

In a possible design, the first access network device receives the I-RNTI from the second access network device, where the first identifier corresponds to the I-RNTI, and the bit length of the first identifier is less than a bit length of the I-RNTI. In this way, the first access network device can identify a correspondence between the first identifier and the I-RNTI.

In a possible design, the first identifier is some bits of a 5G-TMSI in the 5G-S-TMSI. In this way, the bit length of the first identifier can be less than a bit length of the 5G-S-TMSI.

In a possible design, that the first identifier is some bits of the 5G-TMSI in the 5G-S-TMSI may include the following several manners: The first identifier is the last A bits of the 5G-TMSI; the first identifier is the first B bits of the 5G-TMSI; or the first identifier is C bits selected from the 5G-TMSI according to a preset rule, where A, B, and C are positive integers less than a quantity of bits of the 5G-TMSI. In this way, the first identifier can be flexibly obtained based on some bits of the 5G-TMSI.

In a possible design, the bit length of the first identifier is less than 32.

In a possible design, the bit length of the first identifier is greater than or equal to 12 and less than or equal to 24.

In a possible design, the paging message is a first WUR. In this way, the first terminal device can receive the paging message by using a WUR link, thereby reducing power consumption of the first terminal device.

In a possible design, the first WUR further includes first indication information, and the first indication information indicates the bit length of the first identifier, a paging type corresponding to the paging message, or a format of the first WUR. In this way, the first terminal device can accurately identify the paging type and the like based on the first indication information.

In a possible design, that the first indication information indicates a format of the first WUR may include: the first indication information indicates that the first WUR includes the first identifier; and that the first indication information indicates a paging type corresponding to the paging message may include: the first indication information indicates core network paging or access network paging.

In a possible design, a method for sending, by the first access network device, the paging message to the first terminal device may be: The first access network device sends the paging message to the first terminal device by using a first frequency resource. Further, after the first access network device sends the paging message to the first terminal device, the first access network device receives a random access preamble sequence (preamble) from the first terminal device by using a second frequency resource, where the second frequency domain resource is different from the first frequency resource. In this way, the first terminal device no longer needs to receive a conventional paging message, and power consumption can be reduced.

In a possible design, the paging message further includes a third identifier, and the third identifier is used to identify a paged second terminal device. In this way, a plurality of different terminal devices can be paged by using one paging message.

According to a third aspect, this application further provides a communication apparatus. The communication apparatus may be a first terminal device, and the communication apparatus has a function of implementing the method in the first aspect or the possible design examples of the first aspect. The function may be implemented by using hardware, or may be implemented by hardware by executing corresponding software. The hardware or the software includes one or more modules corresponding to the foregoing function.

In a possible design, a structure of the communication apparatus includes a transceiver unit and a processing unit. These units may perform corresponding functions in the first aspect or the possible design examples of the first aspect. For details, refer to detailed descriptions in the method examples. Details are not described herein again.

In a possible design, a structure of the communication apparatus includes a transceiver and a processor, and optionally, further includes a memory. The transceiver is configured to receive and send a message or data and communicate and interact with another device in a communication system. The processor is configured to support the communication apparatus in performing corresponding functions in the first aspect or the possible design examples of the first aspect. The memory is coupled to the processor, and stores program instructions and data that are necessary for the communication apparatus.

According to a fourth aspect, this application further provides a communication apparatus. The communication apparatus may be a first access network device, and the communication apparatus has a function of implementing the method in the second aspect or the possible design examples of the second aspect. The function may be implemented by using hardware, or may be implemented by hardware by executing corresponding software. The hardware or the software includes one or more modules corresponding to the foregoing function.

In a possible design, a structure of the communication apparatus includes a transceiver unit and a processing unit. These units may perform corresponding functions in the second aspect or the possible design examples of the second aspect. For details, refer to detailed descriptions in the method examples. Details are not described herein again.

In a possible design, a structure of the communication apparatus includes a transceiver and a processor, and optionally, further includes a memory. The transceiver is configured to receive and send a message or data and communicate and interact with another device in a communication system. The processor is configured to support the communication apparatus in performing corresponding functions in the second aspect or the possible design examples of the second aspect. The memory is coupled to the processor, and stores program instructions and data that are necessary for the communication apparatus.

According to a fifth aspect, an embodiment of this application provides a communication system, which may include the first terminal device, the first access network device, and the like mentioned above.

According to a sixth aspect, an embodiment of this application provides a computer-readable storage medium. The computer-readable storage medium stores program instructions, and when the program instructions are run on a computer, the computer is enabled to perform the method in the first aspect and any possible design of the first aspect or in the second aspect and any possible design of the second aspect in embodiments of this application. For example, the computer-readable storage medium may be any usable medium that can be accessed by the computer. As an example rather than a limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a seventh aspect, an embodiment of this application provides a computer program product, including computer program code or instructions. When the computer program code or the instructions are run on a computer, the method in the first aspect or any possible design of the first aspect or in the second aspect or any possible design of the second aspect is performed.

According to an eighth aspect, this application further provides a chip, including a processor. The processor is coupled to a memory, and is configured to read and execute program instructions stored in the memory, so that the chip implements the method in the first aspect or any possible design of the first aspect or in the second aspect or any possible design of the second aspect.

For each of the third aspect to the eighth aspect and technical effects that can be achieved in the aspect, refer to the foregoing descriptions of the technical effects that can be achieved in the first aspect or the possible solutions in the first aspect or in the second aspect or the possible solutions in the second aspect. Details are not described herein again.

### BRIEF DESCRIPTION OF DRAWINGS

FIG. 1 is a schematic diagram of an architecture of a communication system according to this application;
FIG. 2 is a schematic diagram of receiving a wake-up radio by a terminal device by using a wake-up circuit according to this application;
FIG. 3 is a schematic diagram of a WUR waveform according to this application;
FIG. 4 is a flowchart of a communication method according to this application;
FIG. 5 is a schematic diagram of a first WUR according to this application;
FIG. 6 is a schematic diagram of another first WUR according to this application;
FIG. 7 is a schematic diagram of another first WUR according to this application;
FIG. 8 is a flowchart of another communication method according to this application;
FIG. 9 is a schematic diagram of a structure of a communication apparatus according to this application; and
FIG. 10 is a diagram of a structure of a communication apparatus according to this application.

### DESCRIPTION OF EMBODIMENTS

The following further describes in detail this application with reference to the accompanying drawings.

Embodiments of this application provide a communication method and apparatus, to reduce paging overheads generated in a process of paging a terminal device. The method and the apparatus in this application are based on a same technical concept. Because problem-resolving principles of the method and the apparatus are similar, mutual reference may be made to implementation of the apparatus and the method, and repeated parts are not described.

In the description of this application, words such as "first" and "second" are merely used for distinguishing between descriptions, and cannot be understood as an indication or implication of relative importance, or cannot be understood as an indication of implication of an order.

In the description of this application, "at least one (type)" means one or more (types), and "a plurality of (types)" means two or more (types).

To describe the technical solutions in embodiments of this application more clearly, the following describes the communication method and apparatus according to embodiments of this application in detail with reference to the accompanying drawings.

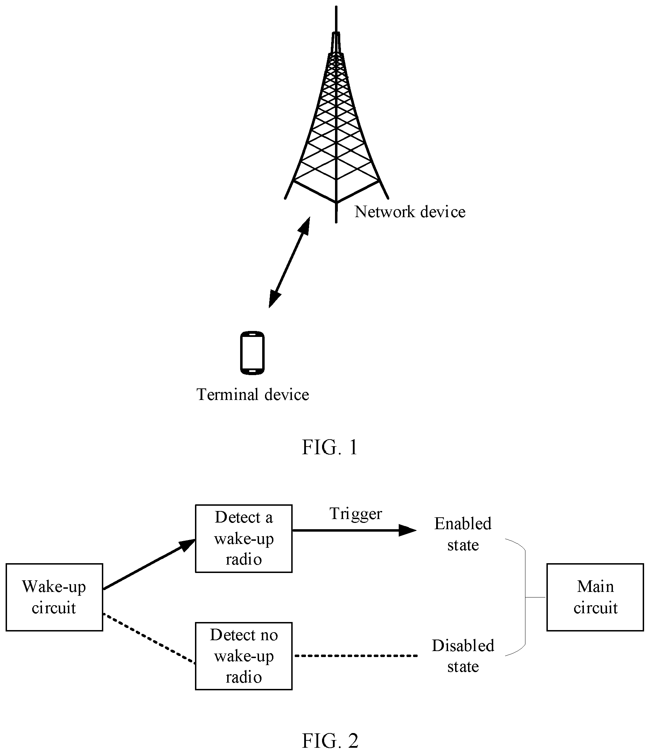

FIG. 1 shows an architecture of a communication system according to an embodiment of this application. The architecture of the communication system includes an access network device and a terminal device.

The access network device is a device that has a wireless receiving/sending function or a chip that can be disposed in the access network device. The access network device includes but is not limited to a generation NodeB (generation NodeB, gNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or an access point (access point, AP), a wireless relay node, a wireless backhaul node, a transmission and reception point (a transmission and reception point, TRP, or a transmission point, TP), or the like in a wireless fidelity (wireless fidelity, Wi-Fi) system. The access network device may alternatively be a network node that constitutes a gNB or a transmission point, for example, a baseband unit (BBU) or a distributed unit (distributed unit, DU).

In some deployments, the gNB may include a centralized unit (centralized unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer is eventually converted into information at the PHY layer, or is converted from information at the PHY layer. Therefore, in this architecture, higher-layer signaling, for example, RRC-layer signaling or PHCP-layer signaling, may also be considered as being sent by the DU or sent by the DU+RU. It may be understood that the access network device may be a CU node, a DU node, or a device including a CU node and a DU node. In addition, the CU may be classified as a network device in an access network RAN, or the CU may be classified as a network device in a core network CN. This is not limited.

The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer with a wireless receiving/sending function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a smart wearable device (smart glasses, a smart watch, or a smart headset), a wireless terminal in a smart home (smart home), or the like. The terminal device may alternatively be a chip, a chip module (or a chip system), or the like that can be disposed in the foregoing device. An application scenario is not limited in embodiments of this application. A terminal device with a wireless receiving/sending function and a chip that can be disposed in the terminal device are collectively referred to as the terminal device in this application.

In this application, the access network device may send a paging message to the terminal device, so that the terminal device is woken up after being paged.

It should be noted that, the communication system shown in FIG. 1 may be but is not limited to a 4th generation (4th Generation, 4G) system and a 5th generation (5th Generation, 5G) system, such as a new radio access technology (new radio access technology, NR). Optionally, the method in embodiments of this application is further applicable to various communication systems in the future, such as a 6th generation (6th Generation, 6G) system or another communication network.

It should be noted that a quantity and types of devices shown in the communication system shown in FIG. 1 are merely examples. There may be more devices in the communication system, for example, a core network device, which is not shown in FIG. 1.

For ease of understanding, the following first briefly describes some related technical knowledge in this application.

### 1. Wake-up link

Generally, a same receiving module (or a receiver, or a receiver circuit) is used regardless of whether a terminal device performs a paging message receiving procedure in an IDLE state or an INACTIVE state or when the terminal device receives data in a connected state. In this application, for ease of description, a module that completes these functions (or performs related steps) is referred to as a main circuit. It may be understood that the main circuit is merely named for differentiation, and a specific name of the main circuit does not limit the protection scope of this application. For example, without loss of generality, the main circuit may also be described as a second circuit (or a second module). The main circuit is uniformly used for description below.

That the terminal device receives a signal by using the main circuit may be referred to as transmission on a main link. The main link represents a connection relationship between the terminal device and an access network device, and is a logical concept rather than a physical entity. It may be understood that the main link is merely named for differentiation, and a specific name of the main link does not limit the protection scope of this application. For example, without loss of generality, the main link may also be described as a second link.

When the terminal device receives a paging message by using the main circuit, power consumption is relatively high. For example, when receiving the paging message, the terminal device first needs to receive a downlink signal by using a receiving module of the main circuit, and then the terminal device further needs to perform blind detection on a physical downlink control channel (physical downlink control channel, PDCCH), and perform decoding on a received physical downlink shared channel (physical downlink shared channel, PDSCH), and the like. All these cause relatively high power consumption. In addition, because the main circuit is relatively complex, reference power consumption (or static power consumption) generated during running of the main circuit is relatively high.

To reduce power consumption caused by receiving paging by the terminal device, a possible method is as follows: The terminal device may receive a wake-up radio (wake-up signal/radio, WUS/WUR) by using a separate low-power small circuit. The wake-up radio indicates paging-related information, and the paging-related information may include, for example, whether one terminal device or a group of terminal devices is paged. The low-power small circuit may be implemented by using a separate small circuit or chip with a simple structure, and has relatively low power consumption.

It should be understood that the low-power small circuit may be, for example, referred to as a wake-up receiver (wake-up receiver, WUR), may be referred to as a wake-up circuit, or may be referred to as a low-power circuit. A name of the low-power small circuit is not limited in this application. In this application, for ease of description, the low-power small circuit is referred to as a wake-up circuit. It may be understood that the wake-up circuit is merely named for differentiation, and a specific name of the wake-up circuit does not limit the protection scope of this application. For example, without loss of generality, the wake-up circuit may also be described as a first circuit (or a first module). For ease of description, the wake-up circuit is uniformly used for description below.

For example, FIG. 2 is a schematic diagram of receiving a wake-up radio by a terminal device by using a wake-up circuit.

Similarly, that the terminal device receives a signal by using the wake-up circuit may be referred to as transmission on a wake-up link. The wake-up link represents a connection relationship between the terminal device and an access network device, and is a logical concept rather than a physical entity. It may be understood that the wake-up link is merely named for differentiation, and a specific name of the wake-up link does not limit the protection scope of this application. For example, without loss of generality, the wake-up link (or referred to as a WUR link) may also be described as a first link. A signal received by the terminal device on the wake-up link may be referred to as a wake-up radio. It should be further understood that the wake-up radio is merely an example name, and a name of the wake-up radio is not limited in this application.

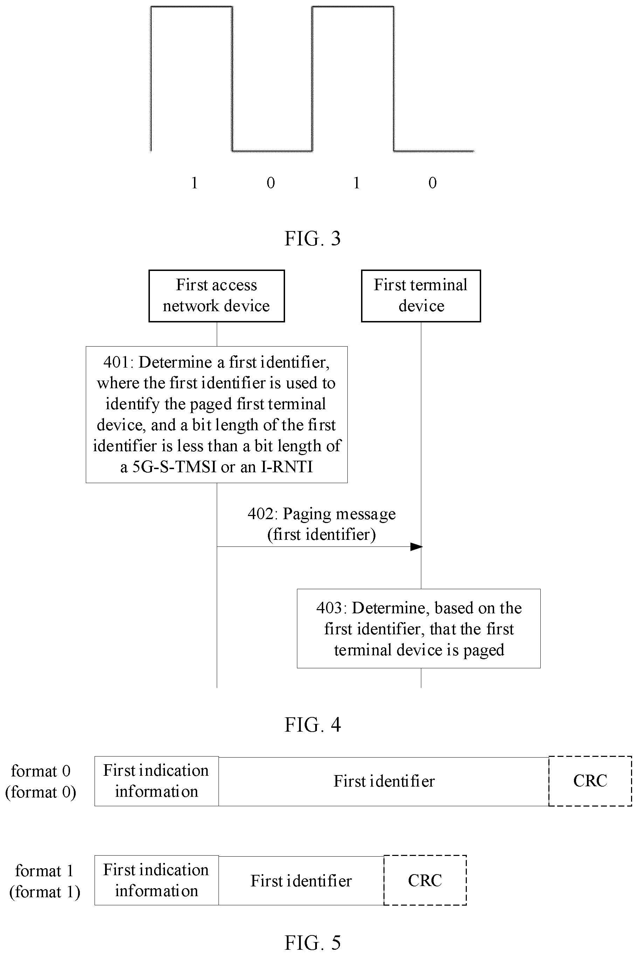

To reduce power consumption of the wake-up circuit, the WUR signal is usually modulated through on-off keying (on-off keying, OOK), and correspondingly, the wake-up circuit may receive the wake-up radio by using an envelope detection method. When modulation is performed through OOK, each (encoded) bit corresponds to one symbol (symbol, which may also be referred to as a chip (chip)). When the bit is 1, a signal is sent in a length of the symbol (that is, signal power is not 0 in the length of the symbol); and when the bit is 0, no signal is sent in the length of the symbol (that is, the signal power is 0 in the length of the symbol). A waveform shown in FIG. 3 represents four bits 1010. It should be understood that, there may be a reverse case. To be specific, when the bit is 0, a signal is sent in the length of the symbol (that is, the signal power is not 0 in the length of the symbol); and when the bit is 1, no signal is sent in the length of the symbol (that is, the signal power is 0 in the length of the symbol). This is not limited in this application.

### 2. First frequency resource and second frequency resource

The following describes the first frequency resource and the second frequency resource with reference to several cases.

In a first possible case, a terminal device includes a first module and a second module. For example, power consumption of the first module may be less than power consumption of the second module. The first module may be, for example, the wake-up circuit in FIG. 2, or may be a receiving module of the wake-up circuit. The second module may be, for example, the main circuit in FIG. 2, or may be a receiving module of the main circuit. In this application, the first module may be replaced with the wake-up circuit (or the first circuit), and the second module may be replaced with the main circuit (or the second circuit). To keep uniform, the first module and the second module are used for description below.

In this case, the first frequency resource may represent a frequency resource used by the terminal device to exchange a signal by using the first module, and the second frequency resource may represent a frequency resource used by the terminal device to exchange a signal by using the second module.

In a second possible case, the terminal device may work on a first link (or the terminal device may exchange a signal on the first link), or may work on a second link (or the terminal device may exchange a signal on the second link). In other words, the terminal device may communicate with a network device by using the first link or by using the second link. For example, as described above, the first link may represent a link used when the terminal device exchanges a signal by using the wake-up circuit in FIG. 2, and the second link may represent a link used when the terminal device exchanges a signal by using the main circuit in FIG. 2.

In this case, the first frequency resource may represent a frequency resource used by the terminal device to exchange a signal on the first link, and the second frequency resource may represent a frequency resource used by the terminal device to exchange a signal on the second link.

In a third possible case, the terminal device may be in a first state (state) (for example, in a WUR state) and a second state. The first state and the second state are used to describe different states (for example, different radio resource control (radio resource control, RRC) states) of the terminal device. For example, power consumption of the terminal device in the first state may be less than power consumption of the terminal device in the second state. The first state may be, for example, an IDLE state or an INACTIVE state, or may be the WUR state. The second state may be, for example, a connected (connected) state, or may be the IDLE state or the INACTIVE state. The first state (for example, the WUR state) may correspond to that the terminal device works on the first link or correspond to that the terminal device exchanges a signal by using the first module.

In this case, the first frequency resource may represent a frequency resource used to exchange a signal when the terminal device is in the first state, and the second frequency resource may represent a frequency resource used to exchange a signal when the terminal device is in the second state.

In a fourth possible case, the terminal device may be in a first mode (mode) (for example, in a WUR mode) and a second mode. The first mode and the second mode are used to describe the following: The terminal device exchanges a signal in different modes. For example, power consumption generated when the terminal device exchanges a signal in the first mode may be less than power consumption generated when the terminal device exchanges a signal in the second mode. The first mode (for example, the WUR mode) may correspond to that the terminal device works on the first link or correspond to that the terminal device exchanges a signal by using the first module.

In this case, the first frequency resource may represent a frequency resource used to exchange a signal when the terminal device is in the first mode, and the second frequency resource may represent a frequency resource used to exchange a signal when the terminal device is in the second mode.

It can be learned from the foregoing description that, exchanging a signal by using the first frequency resource may be replaced with any one of the following: exchanging a signal by using the first module, exchanging a signal on the first link, exchanging a signal in the first state, and exchanging a signal in the first mode; and exchanging a signal by using the second frequency resource may be replaced with any one of the following: exchanging a signal by using the second module, exchanging a signal on the second link, exchanging a signal in the second state, and exchanging a signal in the second mode. To keep uniform, the first frequency resource and the second frequency resource are mainly used as examples for example description below.

### 3. Paging in a current standard

A terminal device monitors a paging (paging) PDCCH (including paging downlink control information (downlink control information, DCI)) on a paging occasion (paging occasion, PO). If the terminal device detects the paging PDCCH, the terminal device receives the paging PDSCH at a location scheduled by the paging PDCCH. The paging PDSCH includes a maximum of 32 paging records (paging records), each paging record may include one terminal device identifier (UE ID), and the terminal device identifier indicates a specific terminal device that is paged.

Paging may be classified into the following two types:
First type of paging: Paging received by the terminal device in an IDLE state is referred to as core network paging (core network paging, CN paging). In this case, the paging is initiated by a core network, and a terminal device identifier of the paged terminal device is sent to an access network device that needs to send a paging message. In this case, a UE ID is a 5G-S-TMSI, and a length of the 5G-S-TMSI is 48 bits (bits). The 5G-S-TMSI is allocated by an access and mobility management function (access and mobility management function, AMF) network element. A structure of the 5G-S-TMSI is as follows: <5G-S-TMSI>=<AMF Set ID><AMF Pointer><5G-TMSI>. A length of the "AMF Set ID" is 10 bits, and a length of the AMF pointer (Pointer) is 6 bits, where both of the lengths may be understood as an identifier of an AMF. The 5th generation-temporary subscriber identity (5th generation-temporary mobile subscriber identification, 5G-TMSI) has a length of 32 bits, and is a unique identifier allocated by the AMF to the terminal device in the AMF.
Second type of paging: Paging received by the terminal device in an INACTIVE state is referred to as access network paging (access network, RAN paging). In this case, the paging is initiated by an access network device. Specifically, the access network device initiating the paging is an access network device corresponding to a last serving cell (last serving cell), that is, an access network device corresponding to a cell in which the terminal device is located when the terminal device changes from a connected (CONNECTED) state to the INACTIVE state. The access network device corresponding to the last serving cell sends, to an access network device that needs to send a paging message, a terminal device identifier of the paged terminal device. In this case, the terminal device identifier is an I-RNTI with a length of 40 bits. The I-RNTI is allocated by the access network device corresponding to the last serving cell.

### 4. Tracking area (tracking area) and radio access network area (RAN area)

Tracking area (tracking area): When a terminal device is in an IDLE state, paging received by the terminal device is core network paging (CN paging), and a network side (namely, a core network device) sends a paging message to the terminal device by using each access network device in a tracking area in which the terminal device is located. The access network device broadcasts, in system information, a tracking area in which the access network device is currently located. When moving to a new cell in the IDLE state, the terminal device receives system information of the new cell, and determines, by reading a tracking area code (TrackingAreaCode) in the system information, whether the terminal device is still in a previous tracking area. If the terminal device finds that the terminal device has entered a new tracking area, the terminal device initiates a mobility registration update (mobility registration update) process, to notify a core network of related information of the new tracking area in which the terminal device is located.

Radio access network area (RAN area): When the terminal device is in an INACTIVE state, paging received by the terminal device is access network paging (RAN paging), and an access network side (which is specifically an access network device corresponding to a last serving cell) sends a paging message to the terminal device by using each access network device station in a RAN area in which the terminal device is located. Each access network device broadcasts, in system information, a RAN area in which the access network device is currently located. When moving to a new cell in the IDLE state, the terminal device receives system information of the new cell, and determines, by reading an access network area code (RAN-AreaCode) in the system information, whether the terminal device is still in a previous RAN area. If the terminal device finds that the terminal device has entered a new RAN area, the terminal device initiates an access network area update (RAN-based notification area update) process, to notify the access network side of related information of the new RAN area in which the terminal device is located.

Generally, a range of the tracking area is larger than that of the RAN area. This may be understood as follows: An access network device corresponding to a RAN area is a subset of access network devices corresponding to a tracking area. In addition, each AMF may correspond to a plurality of tracking areas. Therefore, an access network device corresponding to a tracking area may be further a subset of access network devices corresponding to an AMF.

It can be learned from the foregoing description that, a length of the terminal device identifier included in the current paging message of the terminal device is 48 bits or 40 bits. The terminal device can be uniquely determined by using only a part of the 48-bit or 40-bit terminal device identifier. For example, during CN paging, the terminal device can be uniquely determined if the paging message includes only a 32-bit 5G-TMSI. Therefore, there is redundancy in using the 48-bit or 40-bit terminal device identifier in the current paging message, and consequently, paging overheads are relatively large. Based on this, this application proposes a communication method, to reduce a bit length of a terminal device identifier in a paging message in a paging process while preventing, as far as possible, a terminal device from being mistakenly woken up (to be specific, the terminal device is not paged, but the terminal device considers that the terminal device may be paged, and therefore initiates random access or switches from a WUR link to a main link), to reduce paging overheads.

It should be noted that in embodiments of this application, a paging message may be received by a terminal device, a processor in a terminal device, a chip or a chip system, a functional module, or the like may; and a paging message may be sent by an access network device, a processor in an access network device, a chip or a chip system, a functional module, or the like. Similarly, an operation of another device in this application may be implemented by a device, a processor in a device, a chip or a chip system, a functional module, or the like. This is not limited in this application. In the following embodiments, only the terminal device, the access device, and the like are used as examples to describe in detail the communication method provided in this application. However, this constitutes no limitation on this application.

Based on the foregoing description, the communication method provided in embodiments of this application is applicable to the communication system shown in FIG. 1. Refer to FIG. 4. A specific procedure of the method may include the following steps.

Step 401: A first access network device determines a first identifier, where the first identifier is used to identify a paged first terminal device, a bit length of the first identifier is less than a bit length of a second identifier, and the second identifier is a 5G-S-TMSI or an I-RNTI.

In a first possible example, the first identifier may be an identifier newly allocated by a network device to the first terminal device. The newly allocated identifier may be understood as another identifier different from the 5G-S-TMSI and the I-RNTI. In different paging type scenarios, the network device may be implemented as different devices. For example, the following two scenarios may be used for description.

Scenario a1: In core network paging, that is, in a scenario in which the first terminal device is in an IDLE state, the network device may be a core network device (for example, an access and mobility management function network element, where an AMF is used as an example below to describe the access and mobility management function network element), that is, the core network device allocates the first identifier to the first terminal device. In this case, the bit length of the first identifier is less than a bit length of the 5G-S-TMSI, and the first identifier is a new identifier different from the 5G-S-TMSI.

Correspondingly, in Scenario a1, that a first access network device determines a first identifier is: the first access network device receives the first identifier from the core network device.

When allocating the first identifier to the first terminal device, the core network device may associate (which may also be referred to as "map", "correspond", or the like) the first identifier with the 5G-S-TMSI. Based on this, in addition to the first identifier, the first access network device may further receive the 5G-S-TMSI from the core network device.

In this scenario, optionally, the first identifier allocated by the core network device may be a unique identifier of the first terminal device in a first area, that is, different terminal devices in the first area correspond to different first identifiers. The first area may be a range covered by all cells corresponding to an AMF accessed by the first access network device. In this case, the first access network device is any access network device in the range. Alternatively, the first area may be a tracking area (tracking area) in which the first terminal device is located. In this case, the first access network device may be any access network device in the tracking area.

In a possible case, when the first terminal device moves from an area corresponding to a first AMF to an area corresponding to a second AMF, or when a tracking area of the first terminal device changes, the first terminal device performs mobility registration update (mobility registration update), and is allocated with an updated 5G-S-TMSI by a corresponding updated core network device after the area changes. Correspondingly, in this procedure, the first identifier of the first terminal device may also be updated, to be specific, the updated core network device may send the updated 5G-S-TMSI and an updated first identifier to the first terminal device.

Scenario a2: In access network paging, that is, in a scenario in which the first terminal device is in an INACTIVE state, the network device may be the first access network device, a second access network device, or a core network device. Specifically, there may be the following three cases.

Case b1: When the first access network device is an access network device corresponding to a last serving cell (last serving cell) in which the first terminal device is located, the network device is the first access network device, that is, the first access network device allocates the first identifier to the first terminal device. In this case, the bit length of the first identifier is less than a bit length of the I-RNTI, and the first identifier is a new identifier different from the I-RNTI.

When allocating the first identifier to the first terminal device, the first access network device may associate (which may also be referred to as "map", "correspond", or the like) the first identifier with the I-RNTI.

Case b2: When the second access network device is an access network device corresponding to a last serving cell (last serving cell) in which the first terminal device is located, the network device is the second access network device, that is, the second access network device allocates the first identifier to the first terminal device. In this case, the bit length of the first identifier is less than a bit length of the I-RNTI, and the first identifier is a new identifier different from the I-RNTI.

Correspondingly, in Case b2, that a first access network device determines a first identifier is: the first access network device receives the first identifier from the second access network device.

When allocating the first identifier to the first terminal device, the second access network device may associate (which may also be referred to as "map", "correspond", or the like) the first identifier with the I-RNTI. Based on this, in addition to the first identifier, the first access network device may further receive the I-RNTI from the second access network device.

In Case b1 and Case b2, optionally, the first identifier may be a unique identifier of the first terminal device in a second area, that is, different terminal devices in the second area correspond to different first identifiers. The second area is a radio access network area (RAN area) corresponding to the first terminal device. In Case b2, the first access network device is any access network device in the second area.

In a possible case, when updating the radio access network area, the first terminal device performs access network area update (RAN-based notification area update, RNAU), and an I-RNTI corresponding to the first terminal device is also re-allocated. In this process, the first identifier of the first terminal device is also updated, and an updated access network device corresponding to the first terminal device sends an updated I-RNTI and an updated first identifier to the first terminal device.

Case b3: The network device may be the core network device (for example, an AMF), that is, the core network device allocates the first identifier to the first terminal device. In this case, the bit length of the first identifier is less than a bit length of the 5G-S-TMSI, and the first identifier is a new identifier different from the 5G-S-TMSI. The core network device sends the allocated first identifier to an access network device (in Case b3, a last access network device is used as an example for description) corresponding to a last serving cell (last serving cell) in which the first terminal device is located.

After receiving the first identifier from the core network device, the last access network device maintains an association relationship (which may also be referred to as a correspondence or a mapping relationship) between the I-RNTI and the first identifier.

Optionally, the core network device further sends the 5G-S-TMSI to the last access network device, and then the last access network device maintains an association relationship between the I-RNTI, the first identifier, and the 5G-S-TMSI.

In an optional example 1, when the last access network device is the first access network device, that a first access network device determines a first identifier is: the first access network device receives the first identifier from the core network device.

In an optional example 2, when the last access network device is the second access network device, that a first access network device determines a first identifier is: the first access network device receives the first identifier from the second access network device.

In the example 2, the first access network device further receives the I-RNTI from the second access network device. In addition, optionally, the first access network device may further receive the 5G-S-TMSI from the second access network device.

In Case b3, optionally, the first identifier allocated by the core network device may be a unique identifier of the first terminal device in a first area or a second area, that is, different terminal devices in the first area or the second area correspond to different first identifiers. For a definition of the first area, refer to related descriptions of the first area in Scenario a1. For a definition of the second area, refer to related descriptions of the second area in Case a1 and Case a2. Details are not described herein again.

In a possible case, in Case b3, if the first identifier allocated by the core network device corresponds to the first area, when updating a radio access network area, the first terminal device performs RNAU, and an I-RNTI corresponding to the first terminal device is also re-allocated. In this process, the first identifier allocated by the core network remains unchanged, and the last access network device may re-associate an updated I-RNTI with the first identifier.

In another possible case, in Case b3, if the first identifier allocated by the core network device corresponds to the first area, when the first terminal device updates an AMF or a tracking area, the first terminal device performs mobility registration update. In the mobility registration update process, the core network device may send an updated 5G-S-TMSI and an updated first identifier to the first terminal device. In addition, a radio access network area of the first terminal device also changes, and an I-RNTI corresponding to the first terminal device is also re-allocated. The last access network device may associate an updated I-RNTI with the updated first identifier.

In still another possible case, in Case b3, if the first identifier allocated by the core network device corresponds to the second area, when updating a radio access network area, the first terminal device performs RNAU, and an I-RNTI corresponding to the first terminal device is also re-allocated. In this process, the last access network device may request the core network device to re-allocate a first identifier to the first terminal device, and then the last access network device may associate an updated I-RNTI with an updated first identifier.

It should be noted that, the first area and the second area may be collectively referred to as a first area range, and the first area and the second area are examples of the first area range.

In a second possible example, the first identifier may be a newly defined identifier used to page the first terminal device. In different paging scenarios, definitions of the first identifier are different. For example, the following three scenarios may be used for description.

Scenario c1: In core network paging, that is, in a scenario in which the first terminal device is in an IDLE state, the first identifier may be some bits of a 5G-TMSI (including 32 bits) in the 5G-S-TMSI.

For example, that the first identifier is some bits of the 5G-TMSI may be any one of the following three manners, where A, B, and C are positive integers less than a quantity (that is, 32) of bits of the 5G-TMSI.

Manner d1: The first identifier is the last A bits of the 5G-TMSI, that is, the first identifier is A least significant bits of the 5G-TMSI.

When allocating the 5G-TMSI, a core network device makes quantities of terminal devices on different POs as close as possible. The terminal device determines, based on a least significant bit of the 5G-S-TMSI, a PO corresponding to the terminal device. Therefore, it can be inferred that the core network device performs differentiated allocation from the least significant bit as far as possible when allocating the 5G-TMSI. The first identifier is least significant bits of the 5G-TMSI, so that different terminal devices may correspond to different paging identifiers as far as possible, thereby reducing, as far as possible, a probability that the terminal device is mistakenly woken up.

Manner d2: The first identifier is the first B bits of the 5G-TMSI, that is, the first identifier is B most significant bits of the 5G-TMSI.

Manner d3: The first identifier is C bits selected from the 5G-TMSI according to a preset rule or a preset formula. For example, some bits may be selected from least significant bits of the 5G-TMSI, and some bits may be selected from most significant bits of the 5G-TMSI, to select a total of C bits as the first identifier. For another example, a bit selection location may be determined according to the preset formula, and then a bit is selected. Certainly, there may be other selection methods, which are not listed one by one herein.

It should be noted that, in Scenario c1, when the first terminal device updates a corresponding AMF or updates a tracking area, a 5G-S-TMSI corresponding to the first terminal device is updated, and correspondingly, the first identifier of the first terminal device is also correspondingly updated.

In Scenario c1, the first access network device may determine the first identifier based on the 5G-S-TMSI after obtaining the 5G-S-TMSI from the core network device; or the core network device may determine the first identifier based on the 5G-S-TMSI after allocating the 5G-S-TMSI to the first terminal device, and then send the first identifier to the first access network device.

Scenario c2: In access network paging, that is, in a scenario in which the first terminal device is in an INACTIVE state, the first identifier may be some bits of an I-RNTI (including 40 bits).

For example, that the first identifier is some bits of the I-RNTI may be any one of the following three manners, where D, E, and F are positive integers less than a quantity (that is, 40) of bits of the I-RNTI.

Manner e1: The first identifier is the last D bits of the I-RNTI, that is, the first identifier is D least significant bits of the I-RNTI.

When allocating the I-RNTI, an access network device corresponding to a last serving cell in which the first terminal device is located makes quantities of terminal devices on different POs as close as possible. The terminal device determines, based on a least significant bit of the I-RNTI, a PO corresponding to the terminal device. Therefore, it can be inferred that the access network device performs differentiated allocation from the least significant bit as far as possible when allocating the I-RNTI. The first identifier is least significant bits of the I-RNTI, so that different terminal devices may correspond to different paging identifiers as far as possible, thereby reducing, as far as possible, a probability that the terminal device is mistakenly woken up.

Manner e2: The first identifier is the first E bits of the I-RNTI, that is, the first identifier is E most significant bits of the I-RNTI.

Manner e3: The first identifier is F bits selected from the I-RNTI according to a preset rule or a preset formula. For example, some bits may be selected from least significant bits of the I-RNTI, and some bits may be selected from most significant bits of the I-RNTI, to select a total of F bits as the first identifier. For another example, a bit selection location may be determined according to the preset formula, and then a bit is selected. Certainly, there may be other selection methods, which are not listed one by one herein.

In Scenario c1, the first access network device may determine the first identifier based on the I-RNTI after obtaining the I-RNTI from a second access network device (that is, the access network device corresponding to the last serving cell in which the first terminal device is located); or the second access network device may determine the first identifier based on the I-RNTI after allocating the I-RNTIto the first terminal device, and then send the first identifier to the first access network device. It should be understood that, when the access network device corresponding to the last serving cell in which the first terminal device is located is the first access network device, the first access network device may directly determine the first identifier based on the I-RNTI.

It should be noted that, in Scenario c2, when the first terminal device updates a corresponding access network area, an I-RNTI corresponding to the first terminal device is updated, and correspondingly, the first identifier of the first terminal device is also correspondingly updated.

Scenario c3: In access network paging, that is, in a scenario in which the first terminal device is in an INACTIVE state, the first identifier may be some bits of a 5G-TMSI (including 32 bits) in the 5G-S-TMSI.

The first identifier in Scenario c3 is similar to the first identifier in Scenario c1, and mutual reference may be made. Details are not described herein again.

In Scenario c3, the first access network device may determine the first identifier based on the 5G-S-TMSI after obtaining the 5G-S-TMSI from a core network device or a second access network device; or the core network device may determine the first identifier based on the 5G-S-TMSI after allocating the 5G-S-TMSI to the first terminal device, and then send the first identifier to the first access network device; or the core network device may determine the first identifier based on the 5G-S-TMSI after allocating the 5G-S-TMSI to the first terminal device, and then send the first identifier to the second access network device, and the second access network device further sends the first identifier to the first access network device. It should be understood that, when the first access network device receives the 5G-S-TMSI or the first identifier from the second access network device, the second access network device is an access network device corresponding to a last serving cell in which the first terminal device is located.

It should be noted that, in Scenario c1 and Scenario c3, when the first terminal device updates a corresponding AMF or updates a tracking area, a 5G-S-TMSI corresponding to the first terminal device is updated, and correspondingly, the first identifier of the first terminal device is also correspondingly updated.

It should be noted that, the first possible example and the second possible example may be combined. To be specific, in the first possible example, when the first identifier is less than the 5G-S-TMSI, for details of the first identifier, refer to the examples in Scenario c1 and Scenario c3; and when the first identifier is less than the I-RNTI, for details of the first identifier, refer to the examples in Scenario c2. Specifically, details are not described herein again.

In an optional implementation, the bit length of the first identifier may be related to a quantity of terminal devices in the first area range. The first area range may be a general term of the first area and the second area described above. For details, refer to the foregoing description. Details are not described herein again.

The bit length of the first identifier may be configured by the core network device, or may be predefined by using a protocol.

For example, a correspondence between the quantity of terminal devices in the first area range and a minimum bit length corresponding to the quantity of terminal devices may be shown in Table 1.

**Table 1**

| Quantity of terminal devices | Length required by an identifier |
|---|---|
| 10^4 | 14 |
| 10^5 | 17 |
| 10^6 | 20 |
| 10^7 | 24 |
| 10^8 | 27 |

In an example, the bit length of the first identifier may be less than 32.

In another example, the bit length of the first identifier may be greater than or equal to 12 and less than or equal to 24.

Through estimation of the quantity of terminal devices, in a specific example, when the first area range is a range covered by all cells corresponding to an AMF accessed by the first access network device, the bit length of the first identifier may be greater than or equal to 18 and less than or equal to 24; when the first area range is a tracking area (tracking area) in which the first terminal device is located, the bit length of the first identifier may be greater than or equal to 15 and less than or equal to 21; and when the first area range is a radio access network area (RAN area) corresponding to the first terminal device, the bit length of the first identifier may be greater than or equal to 12 and less than or equal to 18.

Step 402: The first access network device sends a paging message to the first terminal device. Correspondingly, the first terminal device receives the paging message from the first access network device, where the paging message includes the first identifier.

Step 403: The first terminal device determines, based on the first identifier, that the first terminal device is paged.

In an optional implementation, the paging message may be a first WUR.

For example, the first WUR may further include first indication information, and the first indication information indicates the bit length (a size or a length) of the first identifier, a paging type (paging type) corresponding to the paging message, or a format (format) of the first WUR.

That the first indication information indicates a format of the first WUR includes: the first indication information indicates that the first WUR includes the first identifier; and that the first indication information indicates a paging type corresponding to the paging message includes: the first indication information indicates core network paging or access network paging.

In a possible manner, the first WUR has two formats: a format 0 and a format 1. For example, as shown in FIG. 5, the format 0 is used to indicate that the first WUR includes a first identifier corresponding to core network paging, and a bit length of the first identifier is relatively large; and the format 1 is used to indicate that the first WUR includes a first identifier corresponding to access network paging, and a bit length of the first identifier is relatively small. Therefore, different values of the first indication information may be used to indicate different formats of the first WUR. For example, it is assumed that the first indication information includes 1 bit. In this case, if the bit is set to "0", it indicates that the format of the first WUR is the format 0, and the first WUR includes a first identifier with a relatively large bit length; and if the bit is set to " 1", it indicates that the format of the first WUR is the format 1, and the first WUR includes a first identifier with a relatively small bit length. It should be understood that, when the bit is set to "0", it may indicate that the format of the first WUR is the format 1; and when the bit is set to "1", it may indicate that the format of the first WUR is the format 0.

It should be understood that, that "the bit length is relatively large and the bit length is relatively small" mentioned above are relative to each other, to be specific, the bit length of the first identifier corresponding to the format 0 is larger than the bit length of the first identifier corresponding to the format 1, and the bit length of the first identifier corresponding to the format 1 is smaller than the bit length of the first identifier corresponding to the format 0.

For example, when the first indication information indicates core network paging or access network paging, different values of the first indication information may be used to indicate different paging types. For example, it is assumed that the first indication information includes 1 bit. In this case, if the bit is set to "0", it indicates that the paging type is core network paging; and if the bit is set to "1", it indicates that the paging type is access network paging. It should be understood that, when the bit is set to "0", it may indicate that the paging type is access network paging; and when the bit is set to "1", it may indicate that the paging type is core network paging.

Optionally, the first indication information may indicate a bit length of the first WUR. The bit length of the first WUR is indicated to indicate the bit length of the first identifier included in the first WUR; or after the bit length of the first WUR is indicated to indicate the bit length of the first identifier included in the first WUR, the paging type is further determined based on the bit length of the first identifier included in the first WUR; or the paging type is indicated by indicating the bit length of the first WUR.

In a possible manner, the first WUR has a bit length 1 and a bit length 2. For example, the bit length 1 is used to indicate that the first WUR includes a first identifier with a relatively large bit length, for example, the first WUR includes a first identifier corresponding to core network paging; and the bit length 2 is used to indicate that the first WUR includes a first identifier with a relatively small bit length, for example, the first WUR includes a first identifier corresponding to access network paging.

For example, different values of the first indication information may be used to indicate different bit lengths of the first WUR, and the indicated bit length of the first WUR is used to indicate the bit length of the first identifier included in the first WUR. Optionally, the paging type is further determined based on the bit length of the first identifier included in the first WUR. For example, the first indication information includes 1 bit. In this case, if the bit is set to "0", it indicates that the bit length of the first WUR is the bit length 1, and it indicates that the first WUR includes a first identifier with a relatively large bit length, so that it may be determined, based on the first identifier with a relatively large bit length included in the first WUR, that the paging type is core network paging; and if the bit is set to "1", it indicates that the length of the first WUR is the bit length 2, and it indicates that the first WUR includes the first identifier with a relatively small bit length, so that it may be determined, based on the first identifier with a relatively small bit length included in the first WUR, that the paging type is access network paging. It should be understood that, when the bit is set to "0", it may indicate that the bit length of the first WUR is the bit length 2; and when the bit is set to "1", it may indicate that the length of the first WUR is the bit length 1.

It should be understood that, that "the bit length is relatively large and the bit length is relatively small" mentioned above are relative to each other, to be specific, the bit length of the first identifier corresponding to the bit length 1 is larger than the bit length of the first identifier corresponding to the bit length 2, and the bit length of the first identifier corresponding to the bit length 2 is smaller than the bit length of the first identifier corresponding to the bit length 1.

For example, when the bit length of the first WUR is indicated by using the first indication information to indicate the paging type, after different bit lengths of the first WUR are determined by using different values of the first indication information, the corresponding paging type may be determined based on the bit length of the first WUR. For example, when 1 bit included in the first indication information is set to "0" to indicate that the bit length of the first WUR is the bit length 1, it indicates that the paging type is core network paging; and when 1 bit included in the first indication information is set to "1" to indicate that the bit length of the first WUR is the bit length 2, it indicates that the paging type is access network paging.

It should be noted that the first indication information may further include a plurality of bits. This is not limited in this application.

A correspondence between content indicated by the first indication information and the bit length of the first identifier may be predefined in a standard, or may be configured by a network side. This is not limited in this application.

In an example, as shown in FIG. 5, the first indication information may be located at a start location of the first WUR.

For example, the first terminal device may receive the first WUR from the first access network device in a first time interval (which may also be referred to as a first transmission window), and the first time interval is related to the format of the first WUR, the bit length of the first identifier, or the paging type corresponding to the paging message. In this way, different time intervals may be configured or predefined for different formats of the first WUR, different bit lengths of the first identifier, or different paging types corresponding to the paging message.

Optionally, the first WUR may further include a synchronization signal, and the synchronization signal may be located at the start location of the first WUR.

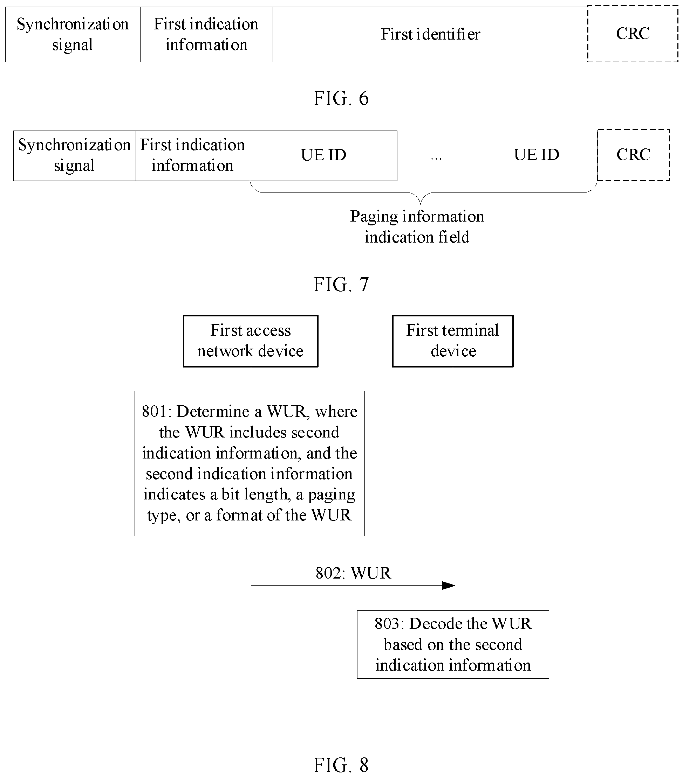

In a possible example, when the first WUR includes both the first indication information and the synchronization signal, for example, the first WUR shown in FIG. 6, the synchronization signal may be located at the start location of the first WUR, and the first indication information may be located after the synchronization signal.

Optionally, the first WUR may further include a cyclic redundancy code check (cyclic redundancy check, CRC) field. As shown by the first WUR shown in FIG. 5 or FIG. 6, the CRC field may be located at an end location of the first WUR.

For example, a length of the CRC field may be related to the bit length of the first identifier. Because different bit lengths or different formats of the first WUR correspond to different bit lengths of the first identifier, different bit lengths or different formats of the first WUR correspond to different lengths of the CRC field. For example, for a format 0 or a bit length 0, the length of the CRC field may be X1 bits; and for a format 1 or a bit length 1, the length of the CRC field may be X2 bits. X1 is greater than X2, and X1 and X2 are integers greater than 0. For example, X1=16 and X2=8.

Optionally, that the first indication information indicates a format of the first WUR may further include: the first indication information indicates that the first WUR includes the first identifier and common information, where the common information may include one or more of the following: warning-related information, system information change indication information, and area identifier information. For example, the warning-related information may include but is not limited to: information about an earthquake and tsunami warning system (earthquake and tsunami warning system, ETWS) and information about a commercial mobile warning system (commercial mobile alert system, CMAS). The system information change indication information may be used to notify the first terminal device that system information changes. The area identifier information may include one or more of the following: a tracking area identifier, a RAN area identifier, and a cell identifier.

A modulation scheme of the first WUR may be OOK, and/or a waveform of the first WUR may be OOK.

In a possible manner, the first terminal device may receive the paging message from the first access network device by using a first frequency resource. For description of the first frequency resource, refer to the description of the first frequency resource at the beginning of embodiments. Details are not described herein again.

Optionally, the first terminal device sends a random access preamble sequence (preamble) to the first access network device after the first terminal device determines, based on the first indication information, that the first terminal device is paged. In other words, when the paging message is a signal transmitted on a WUR link, the first terminal device no longer receives conventional paging (that is, a paging message transmitted on a main circuit), but directly initiates random access. Because a paging message that may be received by the first terminal device on the WUR link may prevent the first terminal device from being mistakenly woken up, the first terminal device does not need to receive a paging message on a conventional main circuit.

The first terminal device may send the random access preamble sequence (preamble) to the first access network device by using a second frequency domain resource, where the second frequency domain resource is different from the first frequency resource. For description of the second frequency resource, refer to the description of the second frequency resource at the beginning of embodiments. Details are not described herein again.

For example, the first terminal device may include a first module and a second module. Therefore, the first terminal device may receive the paging message by using the first module, and the first terminal device may initiate random access by using the second module.

In a possible implementation, the paging message may further include a third identifier, and the third identifier is used to identify a paged second terminal device. A feature of the third identifier is similar to a feature of the first identifier, and mutual reference may be made. The third identifier is no longer described in detail in this application.

In other words, the paging message may include a plurality of identifiers, and the plurality of identifiers are respectively used to identify a plurality of different paged terminal devices. For example, assuming that the paging message is the first WUR, as shown by the first WUR shown in FIG. 7, the first WUR may include a plurality of UE IDs. In FIG. 7, an example in which an indication field including identifiers of a plurality of terminal devices is referred to as a paging information indication field is used for description. An identifier of one terminal device (one UE ID) corresponds to one sub-field of the paging information indication field.

In a scenario in which a synchronization signal (synchronization signal, SYNC) is sent accordingly (that is, the synchronization signal is included each time the paging message is sent), each WUR includes a SYNC head. In this case, if one WUR includes one UE ID, overheads of the SYNC may be relatively large, and consequently, a paging capacity on a WUR link is decreased. Therefore, one WUR may include a plurality of UE IDs to reduce a proportion of the synchronization signal in the WUR, which is equivalent to reducing overheads of the SYNC, thereby increasing the paging capacity on the WUR link.

It should be noted that, that the paging message includes the first identifier in this application may be understood as that the paging message includes information indicating the first identifier. The information indicating the first identifier may be the first identifier, or may be information obtained based on the first identifier. This is not limited in this application.

According to the foregoing method, because the bit length of the first identifier is less than the bit length of the 5G-S-TMSI or the I-RNTI, compared with a current method in which the 5G-S-TMSI or the I-RNTI is directly used to identify a paged terminal device, a bit length of an identifier is reduced, thereby reducing signaling overheads.

An embodiment of this application further provides another communication method, to protect a WUR format design. Refer to FIG. 8. A specific procedure of the method may include the following steps.

Step 801: A first access network device determines a WUR, where the WUR includes second indication information, and the second indication information indicates a bit length, a paging type, or a format of the WUR.

Optionally, that the second indication information indicates a format of the WUR may be: the second indication information indicates that the WUR includes a first identifier and/or common information, where the common information may include one or more of the following: warning-related information, system information change indication information, and area identifier information, and the first identifier is used to page a first terminal device.

For example, the warning-related information may include but is not limited to: information about an earthquake and tsunami warning system (earthquake and tsunami warning system, ETWS) and information about a commercial mobile warning system (commercial mobile alert system, CMAS). The system information change indication information may be used to notify the first terminal device that system information changes. The area identifier information may include one or more of the following: a tracking area identifier, a RAN area identifier, and a cell identifier.

For the first identifier, refer to related descriptions of the first identifier in the embodiment shown in FIG. 4. Details are not described herein again.

Optionally, a modulation scheme of the WUR may be OOK, and/or a waveform of the WUR is OOK.

Optionally, the second indication information may be located at a start location of the WUR.

For example, the WUR may further include a synchronization signal and/or a CRC field. For specific descriptions of the synchronization signal and the CRC field, refer to related descriptions of the synchronization signal or the CRC field included in the first WUR in the embodiment shown in FIG. 4. Details are not described herein again.

It may be understood that, when the second indication information indicates that the WUR includes the first identifier, or when the second indication information indicates that the WUR includes the first identifier and the common information, the second indication information may be understood as the first indication information in the foregoing embodiment. The first WUR in the foregoing embodiment is an example of the WUR in this embodiment.

Step 802: The first access network device sends the WUR to the first terminal device. Correspondingly, the first terminal device receives the WUR from the first access network device.

Step 803: The first terminal device decodes the WUR based on the second indication information.

According to the foregoing method, a terminal device may determine, by using the second indication information, content or a format of information carried in a WUR, thereby correctly decoding the WUR. Through the second indication information, the WUR may be allowed to indicate different types of information, so that the terminal device better works on a WUR link (or referred to as a wake-up link or a first link), and does not need to be switched to a main link (or referred to as a second link) when the terminal device needs to receive the common information.

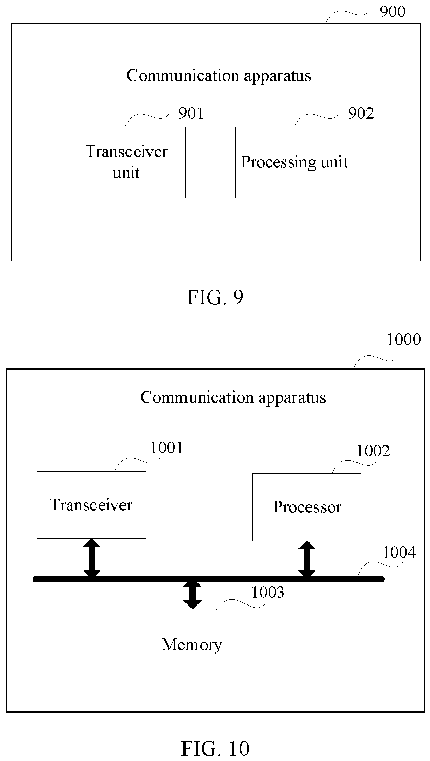

Based on the foregoing embodiments, an embodiment of this application further provides a communication apparatus. Refer to FIG. 9. A communication apparatus 900 may include a transceiver unit 901 and a processing unit 902. The transceiver unit 901 is used by the communication apparatus 900 to receive information (a message or data) or send information (a message or data), and the processing unit 902 is configured to control and manage an action of the communication apparatus 900. The processing unit 902 may further control a step performed by the transceiver unit 901.

For example, the communication apparatus 900 may be specifically the first terminal device in the foregoing embodiments, a processor in the first terminal device, a chip or a chip system, a functional module, or the like; or the communication apparatus 900 may be specifically the first access network device in the foregoing embodiments, a processor in the first access network device, a chip or a chip system, a functional module, or the like.

In an embodiment, when the communication apparatus 900 is configured to implement a function of the first terminal device in the embodiment shown in FIG. 4, the following may be specifically included: The transceiver unit 901 is configured to receive a paging message from a first access network device, where the paging message includes a first identifier, the first identifier is used to identify the paged first terminal device, a bit length of the first identifier is less than a bit length of a second identifier, and the second identifier is a 5G-S-TMSI or an I-RNTI; and the processing unit 902 is configured to determine, based on the first identifier, that the first terminal device is paged.

In an optional implementation, when the first terminal device is in an IDLE state, the first identifier is allocated by a core network device to the first terminal device; and when the first terminal device is in an INACTIVE state, the first identifier is allocated by the core network device.

In another optional implementation, when the first terminal device is in an INACTIVE state, the first identifier is allocated by the first access network device to the first terminal device, or the first identifier is allocated by a second access network device to the first terminal device.

Optionally, the first identifier is some bits of a 5G-TMSI in the 5G-S-TMSI.

For example, that the first identifier is some bits of the 5G-TMSI in the 5G-S-TMSI includes: The first identifier is the last A bits of the 5G-TMSI; the first identifier is the first B bits of the 5G-TMSI; or the first identifier is C bits selected from the 5G-TMSI according to a preset rule, where A, B, and C are positive integers less than a quantity of bits of the 5G-TMSI.

In a possible manner, the bit length of the first identifier is less than 32.

In another possible manner, the bit length of the first identifier is greater than or equal to 12 and less than or equal to 24.

Optionally, the paging message is a first WUR.

For example, the first WUR further includes first indication information, and the first indication information indicates the bit length of the first identifier, a paging type corresponding to the paging message, or a format of the first WUR.

For example, that the first indication information indicates a format of the first WUR includes: the first indication information indicates that the first WUR includes the first identifier; and that the first indication information indicates a paging type corresponding to the paging message includes: the first indication information indicates core network paging or access network paging.

In an optional implementation, when receiving the paging message from the first access network device, the transceiver unit 901 may be specifically configured to: receive the paging message from the first access network device by using a first frequency resource. After the processing unit 902 determines, based on the first indication information, that the first terminal device is paged, the transceiver unit 901 may be further configured to send a random access preamble sequence (preamble) to the first access network device by using a second frequency domain resource, where the second frequency domain resource is different from the first frequency resource.

In a possible example, the paging message further includes a third identifier, and the third identifier is used to identify a paged second terminal device.

In another embodiment, when the communication apparatus 900 is configured to implement a function of the first access network device in the embodiment shown in FIG. 4, the following may be specifically included: The processing unit 902 is configured to determine a first identifier, where the first identifier is used to identify a paged first terminal device, a bit length of the first identifier is less than a bit length of a second identifier, and the second identifier is a 5G-S-TMSI or an I-RNTI; and the transceiver unit 901 is configured to send a paging message to the first terminal device, where the paging message includes the first identifier.

In an optional implementation, if the first terminal device is in an idle (IDLE) state, when determining the first identifier, the processing unit 902 is specifically configured to control the transceiver unit 901 to receive the first identifier from a core network device, where the first identifier is allocated by the core network device to the first terminal device.

If the first terminal device is in an inactive (INACTIVE) state, when determining the first identifier, the processing unit 902 is specifically configured to: control the transceiver unit 901 to receive the first identifier from the core network device, where the first identifier is allocated by the core network device to the first terminal device; or control the transceiver unit 901 to receive the first identifier from a second access network device, where the first identifier is allocated by the core network device to the first terminal device.

Optionally, when the first terminal device is in the idle (IDLE) state, the transceiver unit 901 is further configured to receive the 5G-S-TMSI from the core network device, where the first identifier corresponds to the 5G-S-TMSI, and the bit length of the first identifier is less than a bit length of the 5G-S-TMSI; and when the first terminal device is in the inactive (INACTIVE) state, the transceiver unit 901 is further configured to receive the 5G-S-TMSI from the core network device, or receive the 5G-S-TMSI from the second access network device, where the first identifier corresponds to the 5G-S-TMSI, and the bit length of the first identifier is less than the bit length of the 5G-S-TMSI.

In another optional implementation, if the first terminal device is in an inactive (INACTIVE) state, when determining the first identifier, the processing unit 902 is specifically configured to: control the transceiver unit 901 to receive the first identifier from a second access network device, where the first identifier is allocated by the second access network device to the first terminal device; or allocate the first identifier to the first terminal device.

Optionally, the transceiver unit 901 is further configured to receive the I-RNTI from the second access network device, where the first identifier corresponds to the I-RNTI, and the bit length of the first identifier is less than a bit length of the I-RNTI.

For example, the first identifier is some bits of a 5G-TMSI in the 5G-S-TMSI.

For example, that the first identifier is some bits of the 5G-TMSI in the 5G-S-TMSI may include: The first identifier is the last A bits of the 5G-TMSI; the first identifier is the first B bits of the 5G-TMSI; or the first identifier is C bits selected from the 5G-TMSI according to a preset rule, where A, B, and C are positive integers less than a quantity of bits of the 5G-TMSI.

In a possible example, the bit length of the first identifier is less than 32.

In another possible example, the bit length of the first identifier is greater than or equal to 12 and less than or equal to 24.

In an example, the paging message is a first WUR.

Optionally, the first WUR further includes first indication information, and the first indication information indicates the bit length of the first identifier, a paging type corresponding to the paging message, or a format of the first WUR.

For example, that the first indication information indicates a format of the first WUR includes: the first indication information indicates that the first WUR includes the first identifier; and that the first indication information indicates a paging type corresponding to the paging message includes: the first indication information indicates core network paging or access network paging.

In an optional manner, when sending the paging message to the first terminal device, the transceiver unit 901 is specifically configured to send the paging message to the first terminal device by using a first frequency resource. The transceiver unit 901 is further configured to: after sending the paging message to the first terminal device, receive a random access preamble sequence (preamble) from the first terminal device by using a second frequency resource, where the second frequency domain resource is different from the first frequency resource.

In a possible example, the paging message further includes a third identifier, and the third identifier is used to identify a paged second terminal device.

In another embodiment, when the communication apparatus 900 is configured to implement a function of the first terminal device in the embodiment shown in FIG. 8, the following may be specifically included:

The transceiver unit 901 is configured to receive a WUR from a first access network device, where the WUR includes second indication information, and the second indication information indicates a bit length, a paging type, or a format of the WUR; and the processing unit 902 is configured to decode the WUR based on the second indication information.

In an example, that the second indication information indicates a format of the WUR includes: the second indication information indicates that the WUR includes a first identifier and/or common information, where the common information includes one or more of the following: warning-related information, system information change indication information, and area identifier information, and the first identifier is used to page the first terminal device.

Optionally, a modulation scheme of the WUR is on-off keying OOK, and/or a waveform of the WUR is OOK.

In a possible manner, the second indication information is located at a start location of the WUR.

In another embodiment, when the communication apparatus 900 is configured to implement a function of the first access network device in the embodiment shown in FIG. 8, the following may be specifically included:

The processing unit 902 is configured to determine a WUR, where the WUR includes second indication information, and the second indication information indicates a bit length, a paging type, or a format of the WUR; and the transceiver unit 901 is configured to send the WUR to a first terminal device.

Optionally, that the second indication information indicates a format of the WUR includes: the second indication information indicates that the WUR includes a first identifier and/or common information, where the common information includes one or more of the following: warning-related information, system information change indication information, and area identifier information, and the first identifier is used to page the first terminal device.

For example, a modulation scheme of the WUR is on-off keying OOK, and/or a waveform of the WUR is OOK.

In a possible manner, the second indication information is located at a start location of the WUR.

It should be noted that, in embodiments of this application, division into units is an example, and is merely logical function division. In actual implementation, there may be another division manner. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions in this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) or a processor (processor) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. Refer to FIG. 10. A communication apparatus 1000 may include a transceiver 1001 and a processor 1002. Optionally, the communication apparatus 1000 may further include a memory 1003. The memory 1003 may be disposed inside the communication apparatus 1000, or may be disposed outside the communication apparatus 1000. The processor 1002 may control the transceiver 1001 to receive and send information, a message, data, or the like.

Specifically, the processor 1002 may be a central processing unit (central processing unit, CPU), a network processor (network processor, NP), or a combination of a CPU and an NP. The processor 1002 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof.

The transceiver 1001, the processor 1002, and the memory 1003 are interconnected. Optionally, the transceiver 1001, the processor 1002, and the memory 1003 are interconnected through a bus 1004. The bus 1004 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line represents the bus in FIG. 10, but this does not mean that there is only one bus or only one type of bus.

In an optional implementation, the memory 1003 is configured to store a program and the like. Specifically, the program may include program code, and the program code includes computer-operating instructions. The memory 1003 may include a RAM, and may further include a non-volatile memory (non-volatile memory), for example, one or more disk memories. The processor 1002 executes the application program stored in the memory 1003, to implement the foregoing function, thereby implementing a function of the communication apparatus 1000.

For example, the communication apparatus 1000 may be the first terminal device in the foregoing embodiments, or may be the first access network device in the foregoing embodiments.

In an embodiment, when the communication apparatus 1000 implements a function of the first terminal device in the embodiment shown in FIG. 4, the transceiver 1001 may implement a receiving/sending operation performed by the first terminal device in the embodiment shown in FIG. 4; and the processor 1002 may implement an operation other than the receiving/sending operation performed by the first terminal device in the embodiment shown in FIG. 4. Specifically, for related specific descriptions, refer to related descriptions in the embodiment shown in FIG. 4. Details are not described herein again.

In another embodiment, when the communication apparatus 1000 implements a function of the first access network device in the embodiment shown in FIG. 4, the transceiver 1001 may implement a receiving/sending operation performed by the first access network device in the embodiment shown in FIG. 4; and the processor 1002 may implement an operation other than the receiving/sending operation performed by the first access network device in the embodiment shown in FIG. 4. Specifically, for related specific descriptions, refer to related descriptions in the embodiment shown in FIG. 4. Details are not described herein again.

In another embodiment, when the communication apparatus 1000 implements a function of the first terminal device in the embodiment shown in FIG. 8, the transceiver 1001 may implement a receiving/sending operation performed by the first terminal device in the embodiment shown in FIG. 8; and the processor 1002 may implement an operation other than the receiving/sending operation performed by the first terminal device in the embodiment shown in FIG. 8. Specifically, for related specific descriptions, refer to related descriptions in the embodiment shown in FIG. 8. Details are not described herein again.

In another embodiment, when the communication apparatus 1000 implements a function of the first access network device in the embodiment shown in FIG. 8, the transceiver 1001 may implement a receiving/sending operation performed by the first access network device in the embodiment shown in FIG. 8; and the processor 1002 may implement an operation other than the receiving/sending operation performed by the first access network device in the embodiment shown in FIG. 8. Specifically, for related specific descriptions, refer to related descriptions in the embodiment shown in FIG. 8. Details are not described herein again.

With reference to the foregoing description, this application provides the following embodiments. Numbers of the following embodiments do not necessarily need to comply with a sequence of numbers of the foregoing embodiments.

Embodiment 1: A communication method is provided. The method includes:
a first terminal device receives a paging message from a first access network device, where the paging message includes a first identifier, the first identifier is used to identify the paged first terminal device, a bit length of the first identifier is less than a bit length of a second identifier, and the second identifier is a 5G-S-TMSI or an I-RNTI; and
the first terminal device determines, based on the first identifier, that the first terminal device is paged.

Embodiment 2: In the method according to Embodiment 1, when the first terminal device is in an idle (IDLE) state, the first identifier is allocated by a core network device to the first terminal device.

Embodiment 3: In the method according to Embodiment 1, when the first terminal device is in an inactive (INACTIVE) state, the first identifier is allocated by the first access network device to the first terminal device, or the first identifier is allocated by a second access network device to the first terminal device.

Embodiment 4: In the method according to Embodiment 1, when the first terminal device is in an inactive (INACTIVE) state, the first identifier is allocated by a core network device.

Embodiment 5: In the method according to Embodiment 1, 2, or 4, the first identifier is some bits of a 5G-TMSI in the 5G-S-TMSI.

Embodiment 6: In the method according to Embodiment 5, that the first identifier is some bits of the 5G-TMSI in the 5G-S-TMSI includes:
the first identifier is the last A bits of the 5G-TMSI;
the first identifier is the first B bits of the 5G-TMSI; or
the first identifier is C bits selected from the 5G-TMSI according to a preset rule.

A, B, and C are positive integers less than a quantity of bits of the 5G-TMSI.

Embodiment 7: In the method according to Embodiment 1 or 3, the first identifier is some bits of the I-RNTI.

Embodiment 8: In the method according to Embodiment 7, that the first identifier is some bits of the I-RNTI includes:
the first identifier is the last D bits of the I-RNTI;
the first identifier is the first E bits of the I-RNTI; or
the first identifier is F bits selected from the I-RNTI according to a preset rule.

D, E, and F are positive integers less than a quantity of bits of the I-RNTI.

Embodiment 9: In the method according to any one of Embodiments 1 to 8, the bit length of the first identifier is related to a quantity of terminal devices in a first area range.

When the first terminal device is in the IDLE state, the first area range is a range covered by all cells corresponding to an access and mobility management function network element accessed by the first access network device, or a tracking area (tracking area) in which the first terminal device is located.

When the first terminal device is in the inactive (INACTIVE) state, the first area range is a radio access network area (RAN area) corresponding to the first terminal device.

Embodiment 10: In the method according to any one of Embodiments 1 to 9, the bit length of the first identifier is less than 32.

Embodiment 11: In the method according to any one of Embodiments 1 to 10, the bit length of the first identifier is greater than or equal to 12 and less than or equal to 24.

Embodiment 12: In the method according to Embodiment 9, when the first area range is the range covered by all the cells corresponding to the access and mobility management function network element accessed by the first access network device, the bit length of the first identifier is greater than or equal to 18 and less than or equal to 24.

When the first area range is the tracking area (tracking area) in which the first terminal device is located, the bit length of the first identifier is greater than or equal to 15 and less than or equal to 21.

When the first area range is the radio access network area (RAN area) corresponding to the first terminal device, the bit length of the first identifier is greater than or equal to 12 and less than or equal to 18.

Embodiment 13: In the method according to any one of Embodiments 1 to 12, the paging message is a first wake-up radio WUR.

Embodiment 14: In the method according to Embodiment 13, the first WUR further includes first indication information, and the first indication information indicates the bit length of the first identifier, a paging type corresponding to the paging message, or a format of the first WUR.

Embodiment 15: In the method according to Embodiment 13, that the first terminal device receives the paging message from the first access network device includes:
the first terminal device receives the first WUR from the first access network device in a first time interval, where the first time interval is related to a format of the first WUR, the bit length of the first identifier, or a paging type corresponding to the paging message.

Embodiment 16: In the method according to Embodiment 14, the first indication information is located at a start location of the first WUR.

Embodiment 17: In the method according to Embodiment 14 or 16, that the first indication information indicates a format of the first WUR includes: the first indication information indicates that the first WUR includes the first identifier; and
that the first indication information indicates a paging type corresponding to the paging message includes: the first indication information indicates core network paging or access network paging.

Embodiment 18: In the method according to any one of Embodiments 13 to 15, the first WUR further includes a synchronization signal, and the synchronization signal is located at a start location of the first WUR.

Embodiment 19: In the method according to any one of Embodiments 13 to 18, the first WUR further includes a CRC field, and the CRC field is located at an end location of the first WUR.

Embodiment 20: In the method according to Embodiment 19, a length of the CRC field is related to the bit length of the first identifier.

Embodiment 21: In the method according to any one of Embodiments 1 to 20, that the first terminal device receives the paging message from the first access network device includes:
the first terminal device receives the paging message from the first access network device by using a first frequency resource.

Embodiment 22: In the method according to any one of Embodiments 13 to 21, after the first terminal device determines, based on the first indication information, that the first terminal device is paged, the method further includes:
the first terminal device sends a random access preamble sequence (preamble) to the first access network device.

Embodiment 23: In the method according to Embodiment 22, that the first terminal device sends the random access preamble sequence (preamble) to the first access network device includes:
the first terminal device sends the random access preamble sequence (preamble) to the first access network device by using a second frequency domain resource, where the second frequency domain resource is different from the first frequency resource.

Embodiment 24: In the method according to any one of Embodiments 13 to 23, a modulation scheme of the first WUR is on-off keying OOK, and/or a waveform of the first WUR is OOK.

Embodiment 25: In the method according to any one of Embodiments 13 to 24, the first terminal device includes a first module and a second module, and the method further includes:
the first terminal device receives the paging message by using the first module, and the first terminal device initiates random access by using the second module.

Embodiment 26: In the method according to any one of Embodiments 1 to 25, the paging message further includes a third identifier, and the third identifier is used to identify a paged second terminal device.

Embodiment 27: A communication method is provided. The method includes:
a first access network device determines a first identifier, where the first identifier is used to identify a paged first terminal device, a bit length of the first identifier is less than a bit length of a second identifier, and the second identifier is a 5G-S-TMSI or an I-RNTI; and
the first access network device sends a paging message to the first terminal device, where the paging message includes the first identifier.

Embodiment 28: In the method according to Embodiment 27, when the first terminal device is in an idle (IDLE) state, that the first access network device determines the first identifier includes:
the first access network device receives the first identifier from a core network device, where the first identifier is allocated by the core network device to the first terminal device.

Embodiment 29: In the method according to Embodiment 28, the method further includes:
the first access network device receives the 5G-S-TMSI from the core network device, where the first identifier corresponds to the 5G-S-TMSI, and the bit length of the first identifier is less than a bit length of the 5G-S-TMSI.

Embodiment 30: In the method according to Embodiment 27, when the first terminal device is in an inactive (INACTIVE) state, that the first access network device determines the first identifier includes:
the first access network device receives the first identifier from a second access network device, where the first identifier is allocated by the second access network device to the first terminal device; or
the first access network device allocates the first identifier to the first terminal device.

Embodiment 31: In the method according to Embodiment 27, when the first terminal device is in an inactive (INACTIVE) state, that the first access network device determines the first identifier includes:
the first access network device receives the first identifier from a core network device, where the first identifier is allocated by the core network device to the first terminal device; or
the first access network device receives the first identifier from a second access network device, where the first identifier is allocated by the core network device to the first terminal device.

Embodiment 32: In the method according to Embodiment 30, the method further includes:
the first access network device receives the I-RNTI from the second access network device, where the first identifier corresponds to the I-RNTI, and the bit length of the first identifier is less than a bit length of the I-RNTI.

Embodiment 33: In the method according to any one of Embodiments 27 to 29 and 31, the first identifier is some bits of a 5G-TMSI in the 5G-S-TMSI.

Embodiment 34: In the method according to Embodiment 33, that the first identifier is some bits of the 5G-TMSI in the 5G-S-TMSI includes:
the first identifier is the last A bits of the 5G-TMSI;
the first identifier is the first B bits of the 5G-TMSI; or
the first identifier is C bits selected from the 5G-TMSI according to a preset rule.

A, B, and C are positive integers less than a quantity of bits of the 5G-TMSI.

Embodiment 35: In the method according to Embodiment 27, 30, or 32, when the first terminal device is in an INACTIVE state, the first identifier is some bits of the I-RNTI.

Embodiment 36: In the method according to Embodiment 35, that the first identifier is some bits of the I-RNTI includes:
the first identifier is the last D bits of the I-RNTI;
the first identifier is the first E bits of the I-RNTI; or
the first identifier is F bits selected from the I-RNTI according to a preset rule.

D, E, and F are positive integers less than a quantity of bits of the I-RNTI.

Embodiment 37: In the method according to any one of Embodiments 27 to 36, the bit length of the first identifier is related to a quantity of terminal devices in a first area range.

When the first terminal device is in the IDLE state, the first area range is a range covered by all cells corresponding to an access and mobility management function network element accessed by the first access network device, or a tracking area (tracking area) in which the first terminal device is located.

When the first terminal device is in the inactive (INACTIVE) state, the first area range is a radio access network area (RAN area) corresponding to the first terminal device.

Embodiment 38: In the method according to any one of Embodiments 27 to 37, the bit length of the first identifier is less than 32.

Embodiment 39: In the method according to any one of Embodiments 27 to 38, the bit length of the first identifier is greater than or equal to 12 and less than or equal to 24.

Embodiment 40: In the method according to Embodiment 37, when the first area range is the range covered by all the cells corresponding to the access and mobility management function network element accessed by the first access network device, the bit length of the first identifier is greater than or equal to 18 and less than or equal to 24.

When the first area range is the tracking area (tracking area) in which the first terminal device is located, the bit length of the first identifier is greater than or equal to 15 and less than or equal to 20.

When the first area range is the radio access network area (RAN area) corresponding to the first terminal device, the bit length of the first indication information is greater than or equal to 12 and less than or equal to 18.

Embodiment 41: In the method according to any one of Embodiments 27 to 40, the paging message is a first wake-up radio WUR.

Embodiment 42: In the method according to Embodiment 41, the first WUR further includes first indication information, and the first indication information indicates the bit length of the first identifier, a paging type corresponding to the paging message, or a format of the first WUR.

Embodiment 43: In the method according to Embodiment 41, that the first access network device sends the paging message to the first terminal device includes:
the first access network device sends the first WUR to the first terminal device in a first time interval, where the first time interval is related to a format of the first WUR, the bit length of the first identifier, or a paging type corresponding to the paging message.

Embodiment 44: In the method according to Embodiment 42, the first indication information is located at a start location of the first WUR.

Embodiment 45: In the method according to Embodiment 42 or 44, that the first indication information indicates a format of the first WUR includes: the first indication information indicates that the first WUR includes the first identifier; and
that the first indication information indicates a paging type corresponding to the paging message includes: the first indication information indicates core network paging or access network paging.

Embodiment 46: In the method according to any one of Embodiments 41 to 43, the first WUR further includes a synchronization signal, and the synchronization signal is located at a start location of the first WUR.

Embodiment 47: In the method according to any one of Embodiments 41 to 46, the first WUR further includes a cyclic redundancy code check CRC field, and the CRC field is located at an end location of the first WUR.

Embodiment 48: In the method according to Embodiment 47, a length of the CRC field is related to the bit length of the first identifier.

Embodiment 49: In the method according to any one of Embodiments 27 to 48, that the first access network device sends the paging message to the first terminal device includes:
the first access network device sends the paging message to the first terminal device by using a first frequency resource.

Embodiment 50: In the method according to any one of Embodiments 41 to 49, after the first access network device sends the paging message to the first terminal device, the method further includes:
the first access network device receives a random access preamble sequence (preamble) from the first terminal device.

Embodiment 51: In the method according to Embodiment 50, that the first access network device receives the random access preamble sequence (preamble) from the first terminal device includes:
the first access network device receives the random access preamble sequence (preamble) from the first terminal device by using a second frequency resource, where the second frequency resource is different from the first frequency resource.

Embodiment 52: In the method according to any one of Embodiments 41 to 51, a modulation scheme of the first WUR is on-off keying OOK, and/or a waveform of the first WUR is OOK.

Embodiment 53: In the method according to any one of Embodiments 27 to 52, the paging message further includes a third identifier, and the third identifier is used to identify a paged second terminal device.

Embodiment 54: A communication method is provided. The method includes:
a network device determines a first identifier, where the first identifier is used to identify a paged first terminal device, a bit length of the first identifier is less than a bit length of a second identifier, and the second identifier is a 5G-S-TMSI or an I-RNTI; and
the network device sends the first identifier to a first access network device.

Embodiment 55: In the method according to Embodiment 54, when the first terminal device is in an idle (IDLE) state, the network device is a core network device, and that the network device determines the first identifier includes:
the core network device allocates the first identifier to the first terminal device.

Embodiment 56: In the method according to Embodiment 55, the method further includes:
the network device sends the 5G-S-TMSI to the first access network device, where the first identifier corresponds to the 5G-S-TMSI, and the bit length of the first identifier is less than a bit length of the 5G-S-TMSI.

Embodiment 57: In the method according to Embodiment 54, when the first terminal device is in an inactive (INACTIVE) state, the network device is a second access network device, and that the network device determines the first identifier includes:
the second access network device allocates the first identifier to the first terminal device.

Embodiment 58: In the method according to Embodiment 54, when the first terminal device is in an inactive (INACTIVE) state, the network device is a second access network device, and that the network device determines the first identifier includes:
the second access network device receives the first identifier from a core network device.

Embodiment 59: In the method according to Embodiment 54, when the first terminal device is in an inactive (INACTIVE) state, the network device is the first access network device, and that the network device determines the first identifier includes:
the first access network device allocates the first identifier to the first terminal device.

Embodiment 60: In the method according to Embodiment 57, the method further includes:
the network device sends the I-RNTI to the first access network device, where the first identifier corresponds to the I-RNTI, and the bit length of the first identifier is less than a bit length of the I-RNTI.

Embodiment 61: In the method according to any one of Embodiments 54 to 56 and 58, the first identifier is some bits of a 5G-TMSI in the 5G-S-TMSI.

Embodiment 62: In the method according to Embodiment 61, that the first identifier is some bits of the 5G-TMSI in the 5G-S-TMSI includes:
the first identifier is the last A bits of the 5G-TMSI;
the first identifier is the first B bits of the 5G-TMSI; or
the first identifier is C bits selected from the 5G-TMSI according to a preset rule.

A, B, and C are positive integers less than a quantity of bits of the 5G-TMSI.

Embodiment 63: In the method according to Embodiment 54, 57, or 60, when the first terminal device is in an INACTIVE state, the first identifier is some bits of the I-RNTI.

Embodiment 64: In the method according to Embodiment 63, that the first identifier is some bits of the I-RNTI includes:
the first identifier is the last D bits of the I-RNTI;
the first identifier is the first E bits of the I-RNTI; or
the first identifier is F bits selected from the I-RNTI according to a preset rule.

D, E, and F are positive integers less than a quantity of bits of the I-RNTI.

Embodiment 65: In the method according to any one of Embodiments 54 to 64, the bit length of the first identifier is related to a quantity of terminal devices in a first area range.

When the first terminal device is in the IDLE state, the first area range is a range covered by all cells corresponding to an access and mobility management function network element accessed by the first access network device, or a tracking area (tracking area) in which the first terminal device is located.

When the first terminal device is in the inactive (INACTIVE) state, the first area range is a radio access network area (RAN area) corresponding to the first terminal device.

Embodiment 66: In the method according to any one of Embodiments 54 to 65, the bit length of the first identifier is less than 32.

Embodiment 67: In the method according to any one of Embodiments 54 to 66, the bit length of the first identifier is greater than or equal to 12 and less than or equal to 24.

Embodiment 68: In the method according to Embodiment 65, when the first area range is the range covered by all the cells corresponding to the access and mobility management function network element accessed by the first access network device, the bit length of the first identifier is greater than or equal to 18 and less than or equal to 24.

When the first area range is the tracking area (tracking area) in which the first terminal device is located, the bit length of the first indication information is greater than or equal to 15 and less than or equal to 20.

When the first area range is the radio access network area (RAN area) corresponding to the first terminal device, the bit length of the first indication information is greater than or equal to 12 and less than or equal to 18.

Embodiment 69: A communication method is provided. The method includes:
a first terminal device receives a WUR from a first access network device, where the WUR includes second indication information, and the second indication information indicates a bit length, a paging type, or a format of the WUR; and
the first terminal device decodes the WUR based on the second indication information.

Embodiment 70: In the method according to Embodiment 69, that the second indication information indicates a format of the WUR includes:
the second indication information indicates that the WUR includes a first identifier and/or common information, where the common information includes one or more of the following: warning-related information, system information change indication information, and area identifier information, and the first identifier is used to page the first terminal device.

Embodiment 71: In the method according to Embodiment 69 or 70, a modulation scheme of the WUR is on-off keying OOK, and/or a waveform of the WUR is OOK.

Embodiment 72: In the method according to any one of Embodiments 69 to 71, the second indication information is located at a start location of the WUR.

Embodiment 73: A communication method is provided. The method includes:
a first access network device determines a wake-up radio WUR, where the WUR includes second indication information, and the second indication information indicates a bit length, a paging type, or a format of the WUR; and
the first access network device sends the WUR to a first terminal device.

Embodiment 74: In the method according to Embodiment 73, that the second indication information indicates a format of the WUR includes:
the second indication information indicates that the WUR includes a first identifier and/or common information, where the common information includes one or more of the following: warning-related information, system information change indication information, and area identifier information, and the first identifier is used to page the first terminal device.

Embodiment 75: In the method according to Embodiment 73 or 74, a modulation scheme of the WUR is on-off keying OOK, and/or a waveform of the WUR is OOK.

Embodiment 76: In the method according to any one of Embodiments 73 to 75, the second indication information is located at a start location of the WUR.

Embodiment 77: A communication apparatus is provided. The apparatus includes:
a transceiver unit, configured to receive a paging message from a first access network device, where the paging message includes a first identifier, the first identifier is used to identify a paged first terminal device, a bit length of the first identifier is less than a bit length of a second identifier, and the second identifier is a 5G-S-TMSI or an I-RNTI; and
a processing unit, configured to determine, based on the first identifier, that the first terminal device is paged.

Embodiment 78: In the apparatus according to Embodiment 77, when the first terminal device is in an idle (IDLE) state, the first identifier is allocated by a core network device to the first terminal device.

Embodiment 79: In the apparatus according to Embodiment 77, when the first terminal device is in an inactive (INACTIVE) state, the first identifier is allocated by the first access network device to the first terminal device, or the first identifier is allocated by a second access network device to the first terminal device.

Embodiment 80: In the apparatus according to Embodiment 77, when the first terminal device is in an inactive (INACTIVE) state, the first identifier is allocated by a core network device.

Embodiment 81: In the apparatus according to Embodiment 77, 78, or 80, the first identifier is some bits of a 5G-TMSI in the 5G-S-TMSI.

Embodiment 82: In the apparatus according to Embodiment 81, that the first identifier is some bits of the 5G-TMSI in the 5G-S-TMSI includes:
the first identifier is the last A bits of the 5G-TMSI;
the first identifier is the first B bits of the 5G-TMSI; or
the first identifier is C bits selected from the 5G-TMSI according to a preset rule.

A, B, and C are positive integers less than a quantity of bits of the 5G-TMSI.

Embodiment 83: In the apparatus according to Embodiment 77 or 79, the first identifier is some bits of the I-RNTI.

Embodiment 84: In the apparatus according to Embodiment 83, that the first identifier is some bits of the I-RNTI includes:
the first identifier is the last D bits of the I-RNTI;
the first identifier is the first E bits of the I-RNTI; or
the first identifier is F bits selected from the I-RNTI according to a preset rule.

D, E, and F are positive integers less than a quantity of bits of the I-RNTI.

Embodiment 85: In the apparatus according to any one of Embodiments 77 to 84, the bit length of the first identifier is related to a quantity of terminal devices in a first area range.

When the first terminal device is in the IDLE state, the first area range is a range covered by all cells corresponding to an access and mobility management function network element accessed by the first access network device, or a tracking area (tracking area) in which the first terminal device is located.

When the first terminal device is in the inactive (INACTIVE) state, the first area range is a radio access network area (RAN area) corresponding to the first terminal device.

Embodiment 86: In the apparatus according to any one of Embodiments 77 to 85, the bit length of the first identifier is less than 32.

Embodiment 87: In the apparatus according to any one of Embodiments 77 to 86, the bit length of the first identifier is greater than or equal to 12 and less than or equal to 24.

Embodiment 88: In the apparatus according to Embodiment 85, when the first area range is the range covered by all the cells corresponding to the access and mobility management function network element accessed by the first access network device, the bit length of the first identifier is greater than or equal to 18 and less than or equal to 24.

When the first area range is the tracking area (tracking area) in which the first terminal device is located, the bit length of the first identifier is greater than or equal to 15 and less than or equal to 21.

When the first area range is the radio access network area (RAN area) corresponding to the first terminal device, the bit length of the first identifier is greater than or equal to 12 and less than or equal to 18.

Embodiment 89: In the apparatus according to any one of Embodiments 77 to 88, the paging message is a first wake-up radio WUR.

Embodiment 90: In the apparatus according to Embodiment 89, the first WUR further includes first indication information, and the first indication information indicates the bit length of the first identifier, a paging type corresponding to the paging message, or a format of the first WUR.

Embodiment 91: In the apparatus according to Embodiment 89, when receiving the paging message from the first access network device, the transceiver unit is specifically configured to:
receive the first WUR from the first access network device in a first time interval, where the first time interval is related to a format of the first WUR, the bit length of the first identifier, or a paging type corresponding to the paging message.

Embodiment 92: In the apparatus according to Embodiment 90, the first indication information is located at a start location of the first WUR.

Embodiment 93: In the apparatus according to Embodiment 90 or 92, that the first indication information indicates a format of the first WUR includes: the first indication information indicates that the first WUR includes the first identifier; and
that the first indication information indicates a paging type corresponding to the paging message includes: the first indication information indicates core network paging or access network paging.

Embodiment 94: In the apparatus according to any one of Embodiments 89 to 91, the first WUR further includes a synchronization signal, and the synchronization signal is located at a start location of the first WUR.

Embodiment 95: In the apparatus according to any one of Embodiments 89 to 94, the first WUR further includes a CRC field, and the CRC field is located at an end location of the first WUR.

Embodiment 96: In the apparatus according to Embodiment 95, a length of the CRC field is related to the bit length of the first identifier.

Embodiment 97: In the apparatus according to any one of Embodiments 77 to 96, when receiving the paging message from the first access network device, the transceiver unit is specifically configured to:
=receive the paging message from the first access network device by using a first frequency resource.

Embodiment 98: In the apparatus according to any one of Embodiments 89 to 97, the transceiver unit is further configured to:
send a random access preamble sequence (preamble) to the first access network device after the processing unit determines, based on the first indication information, that the first terminal device is paged.

Embodiment 99: In the apparatus according to Embodiment 98, when sending the random access preamble sequence (preamble) to the first access network device, the transceiver unit is specifically configured to:
send the random access preamble sequence (preamble) to the first access network device by using a second frequency domain resource, where the second frequency domain resource is different from the first frequency resource.

Embodiment 100: In the apparatus according to any one of Embodiments 89 to 99, a modulation scheme of the first WUR is on-off keying OOK, and/or a waveform of the first WUR is OOK.

Embodiment 101: The apparatus according to any one of Embodiments 89 to 100 further includes a first module and a second module, and the transceiver unit is specifically configured to:
receive the paging message by using the first module, and initiate random access by using the second module.

Embodiment 102: In the apparatus according to any one of Embodiments 77 to 101, the paging message further includes a third identifier, and the third identifier is used to identify a paged second terminal device.

Embodiment 103: A communication apparatus is provided. The apparatus includes:
a processing unit, configured to determine a first identifier, where the first identifier is used to identify a paged first terminal device, a bit length of the first identifier is less than a bit length of a second identifier, and the second identifier is a 5G-S-TMSI or an I-RNTI; and
a transceiver unit, configured to send a paging message to the first terminal device, where the paging message includes the first identifier.

Embodiment 104: In the apparatus according to Embodiment 103, if the first terminal device is in an idle (IDLE) state, when determining the first identifier, the processing unit is specifically configured to:
control the transceiver unit to receive the first identifier from a core network device, where the first identifier is allocated by the core network device to the first terminal device.

Embodiment 105: In the apparatus according to Embodiment 104, the transceiver unit is further configured to:
receive the 5G-S-TMSI from the core network device, where the first identifier corresponds to the 5G-S-TMSI, and the bit length of the first identifier is less than a bit length of the 5G-S-TMSI.

Embodiment 106: In the apparatus according to Embodiment 103, if the first terminal device is in an inactive (INACTIVE) state, when determining the first identifier, the processing unit is specifically configured to:
control the transceiver unit to receive the first identifier from a second access network device, where the first identifier is allocated by the second access network device to the first terminal device; or
allocate the first identifier to the first terminal device.

Embodiment 107: In the apparatus according to Embodiment 103, if the first terminal device is in an inactive (INACTIVE) state, when determining the first identifier, the processing unit is specifically configured to:
control the transceiver unit to receive the first identifier from a core network device, where the first identifier is allocated by the core network device to the first terminal device; or
control the transceiver unit to receive the first identifier from a second access network device, where the first identifier is allocated by the core network device to the first terminal device.

Embodiment 108: In the apparatus according to Embodiment 106, the transceiver unit is further configured to:
receive the I-RNTI from the second access network device, where the first identifier corresponds to the I-RNTI, and the bit length of the first identifier is less than a bit length of the I-RNTI.

Embodiment 109: In the apparatus according to any one of Embodiments 103 to 105 and 107, the first identifier is some bits of a 5G-TMSI in the 5G-S-TMSI.

Embodiment 110: In the apparatus according to Embodiment 109, that the first identifier is some bits of the 5G-TMSI in the 5G-S-TMSI includes:
the first identifier is the last A bits of the 5G-TMSI;
the first identifier is the first B bits of the 5G-TMSI; or
the first identifier is C bits selected from the 5G-TMSI according to a preset rule.

A, B, and C are positive integers less than a quantity of bits of the 5G-TMSI.

Embodiment 111: In the apparatus according to Embodiment 103, 106, or 108, when the first terminal device is in an INACTIVE state, the first identifier is some bits of the I-RNTI.

Embodiment 112: In the apparatus according to Embodiment 111, that the first identifier is some bits of the I-RNTI includes:
the first identifier is the last D bits of the I-RNTI;
the first identifier is the first E bits of the I-RNTI; or
the first identifier is F bits selected from the I-RNTI according to a preset rule.

D, E, and F are positive integers less than a quantity of bits of the I-RNTI.

Embodiment 113: In the apparatus according to any one of Embodiments 103 to 112, the bit length of the first identifier is related to a quantity of terminal devices in a first area range.

When the first terminal device is in the IDLE state, the first area range is a range covered by all cells corresponding to an access and mobility management function network element accessed by the first access network device, or a tracking area (tracking area) in which the first terminal device is located.

When the first terminal device is in the inactive (INACTIVE) state, the first area range is a radio access network area (RAN area) corresponding to the first terminal device.

Embodiment 114: In the apparatus according to any one of Embodiments 103 to 113, the bit length of the first identifier is less than 32.

Embodiment 115: In the apparatus according to any one of Embodiments 103 to 114, the bit length of the first identifier is greater than or equal to 12 and less than or equal to 24.

Embodiment 116: In the apparatus according to Embodiment 113, when the first area range is the range covered by all the cells corresponding to the access and mobility management function network element accessed by the first access network device, the bit length of the first identifier is greater than or equal to 18 and less than or equal to 24.

When the first area range is the tracking area (tracking area) in which the first terminal device is located, the bit length of the first identifier is greater than or equal to 15 and less than or equal to 20.

When the first area range is the radio access network area (RAN area) corresponding to the first terminal device, the bit length of the first indication information is greater than or equal to 12 and less than or equal to 18.

Embodiment 117: In the apparatus according to any one of Embodiments 103 to 116, the paging message is a first wake-up radio WUR.

Embodiment 118: In the apparatus according to Embodiment 117, the first WUR further includes first indication information, and the first indication information indicates the bit length of the first identifier, a paging type corresponding to the paging message, or a format of the first WUR.

Embodiment 119: In the apparatus according to Embodiment 117, when sending the paging message to the first terminal device, the transceiver unit is specifically configured to:
send the first WUR to the first terminal device in a first time interval, where the first time interval is related to a format of the first WUR, the bit length of the first identifier, or a paging type corresponding to the paging message.

Embodiment 120: In the apparatus according to Embodiment 118, the first indication information is located at a start location of the first WUR.

Embodiment 121: In the apparatus according to Embodiment 118 or 120, that the first indication information indicates a format of the first WUR includes: the first indication information indicates that the first WUR includes the first identifier; and
that the first indication information indicates a paging type corresponding to the paging message includes: the first indication information indicates core network paging or access network paging.

Embodiment 122: In the apparatus according to any one of Embodiments 117 to 119, the first WUR further includes a synchronization signal, and the synchronization signal is located at a start location of the first WUR.

Embodiment 123: In the apparatus according to any one of Embodiments 117 to 122, the first WUR further includes a cyclic redundancy code check CRC field, and the CRC field is located at an end location of the first WUR.

Embodiment 124: In the apparatus according to Embodiment 123, a length of the CRC field is related to the bit length of the first identifier.

Embodiment 125: In the apparatus according to any one of Embodiments 103 to 124, when sending the paging message to the first terminal device, the transceiver unit is specifically configured to:
send the paging message to the first terminal device by using a first frequency resource.

Embodiment 126: In the apparatus according to any one of Embodiments 117 to 125, after the first access network device sends the paging message to the first terminal device, the transceiver unit is further configured to:
receive a random access preamble sequence (preamble) from the first terminal device.

Embodiment 127: In the apparatus according to Embodiment 126, when receiving the random access preamble sequence (preamble) from the first terminal device, the transceiver unit is specifically configured to:
receive the random access preamble sequence (preamble) from the first terminal device by using a second frequency resource, where the second frequency resource is different from the first frequency resource.

Embodiment 128: In the apparatus according to any one of Embodiments 103 to 127, a modulation scheme of the first WUR is on-off keying OOK, and/or a waveform of the first WUR is OOK.

Embodiment 129: In the apparatus according to any one of Embodiments 103 to 128, the paging message further includes a third identifier, and the third identifier is used to identify a paged second terminal device.

Embodiment 130: A communication apparatus is provided. The apparatus includes:
a processing unit, configured to determine a first identifier, where the first identifier is used to identify a paged first terminal device, a bit length of the first identifier is less than a bit length of a second identifier, and the second identifier is a 5G-S-TMSI or an I-RNTI; and
a transceiver unit, configured to send the first identifier to a first access network device.

Embodiment 131: In the apparatus according to Embodiment 130, when the first terminal device is in an idle (IDLE) state, the network device is a core network device, and when determining the first identifier, the processing unit is specifically configured to:
allocate the first identifier to the first terminal device.

Embodiment 132: In the apparatus according to Embodiment 131, the transceiver unit is further configured to:
send the 5G-S-TMSI to the first access network device, where the first identifier corresponds to the 5G-S-TMSI, and the bit length of the first identifier is less than a bit length of the 5G-S-TMSI.

Embodiment 133: In the apparatus according to Embodiment 130, when the first terminal device is in an inactive (INACTIVE) state, the network device is a second access network device, and when determining the first identifier, the processing unit is specifically configured to:
allocate the first identifier to the first terminal device.

Embodiment 134: In the apparatus according to Embodiment 130, when the first terminal device is in an inactive (INACTIVE) state, the network device is a second access network device, and when determining the first identifier, the processing unit is specifically configured to:
control the transceiver unit to receive the first identifier from a core network device.

Embodiment 135: In the apparatus according to Embodiment 130, when the first terminal device is in an inactive (INACTIVE) state, the network device is the first access network device, and when determining the first identifier, the processing unit is specifically configured to:
allocate the first identifier to the first terminal device.

Embodiment 136: In the apparatus according to Embodiment 133, the transceiver unit is further configured to:
send the I-RNTI to the first access network device, where the first identifier corresponds to the I-RNTI, and the bit length of the first identifier is less than a bit length of the I-RNTI.

Embodiment 137: In the apparatus according to any one of Embodiments 130 to 132 and 134, the first identifier is some bits of a 5G-TMSI in the 5G-S-TMSI.

Embodiment 138: In the apparatus according to Embodiment 137, that the first identifier is some bits of the 5G-TMSI in the 5G-S-TMSI includes:
the first identifier is the last A bits of the 5G-TMSI;
the first identifier is the first B bits of the 5G-TMSI; or
the first identifier is C bits selected from the 5G-TMSI according to a preset rule.

A, B, and C are positive integers less than a quantity of bits of the 5G-TMSI.

Embodiment 139: In the apparatus according to Embodiment 130, 133, or 136, when the first terminal device is in an INACTIVE state, the first identifier is some bits of the I-RNTI.

Embodiment 140: In the apparatus according to Embodiment 139, that the first identifier is some bits of the I-RNTI includes:
the first identifier is the last D bits of the I-RNTI;
the first identifier is the first E bits of the I-RNTI; or
the first identifier is F bits selected from the I-RNTI according to a preset rule.

D, E, and F are positive integers less than a quantity of bits of the I-RNTI.

Embodiment 141: In the apparatus according to any one of Embodiments 130 to 140, the bit length of the first identifier is related to a quantity of terminal devices in a first area range.

When the first terminal device is in the IDLE state, the first area range is a range covered by all cells corresponding to an access and mobility management function network element accessed by the first access network device, or a tracking area (tracking area) in which the first terminal device is located.

When the first terminal device is in the inactive (INACTIVE) state, the first area range is a radio access network area (RAN area) corresponding to the first terminal device.

Embodiment 142: In the apparatus according to any one of Embodiments 130 to 141, the bit length of the first identifier is less than 32.

Embodiment 143: In the apparatus according to any one of Embodiments 130 to 142, the bit length of the first identifier is greater than or equal to 12 and less than or equal to 24.

Embodiment 144: In the apparatus according to Embodiment 141, when the first area range is the range covered by all the cells corresponding to the access and mobility management function network element accessed by the first access network device, the bit length of the first identifier is greater than or equal to 18 and less than or equal to 24.

When the first area range is the tracking area (tracking area) in which the first terminal device is located, the bit length of the first indication information is greater than or equal to 15 and less than or equal to 20.

When the first area range is the radio access network area (RAN area) corresponding to the first terminal device, the bit length of the first indication information is greater than or equal to 12 and less than or equal to 18.

Embodiment 145: A communication apparatus is provided. The apparatus includes:
a transceiver unit, configured to receive a WUR from a first access network device, where the WUR includes second indication information, and the second indication information indicates a bit length, a paging type, or a format of the WUR; and
a processing unit, configured to decode the WUR based on the second indication information.

Embodiment 146: In the apparatus according to Embodiment 145, that the second indication information indicates a format of the WUR includes:
the second indication information indicates that the WUR includes a first identifier and/or common information, where the common information includes one or more of the following: warning-related information, system information change indication information, and area identifier information, and the first identifier is used to page the first terminal device.

Embodiment 147: In the apparatus according to Embodiment 145 or 146, a modulation scheme of the WUR is on-off keying OOK, and/or a waveform of the WUR is OOK.

Embodiment 148: In the apparatus according to any one of Embodiments 145 to 147, the second indication information is located at a start location of the WUR.

Embodiment 149: A communication apparatus is provided. The apparatus includes:
a processing unit, configured to determine a wake-up radio WUR, where the WUR includes second indication information, and the second indication information indicates a bit length, a paging type, or a format of the WUR; and
a transceiver unit, configured to send the WUR to a first terminal device.

Embodiment 150: In the apparatus according to Embodiment 149, that the second indication information indicates a format of the WUR includes:
the second indication information indicates that the WUR includes a first identifier and/or common information, where the common information includes one or more of the following: warning-related information, system information change indication information, and area identifier information, and the first identifier is used to page the first terminal device.

Embodiment 151: In the apparatus according to Embodiment 149 or 150, a modulation scheme of the WUR is on-off keying OOK, and/or a waveform of the WUR is OOK.

Embodiment 152: In the apparatus according to any one of Embodiments 149 to 151, the second indication information is located at a start location of the WUR.

Embodiment 153: A communication apparatus is provided, including a memory, a processor, and a transceiver.

The memory is configured to store computer instructions.

The transceiver is configured to receive and send a message.

The processor is coupled to the memory, and is configured to invoke the computer instructions in the memory, to perform the method according to any one of Embodiments 1 to 26 by using the transceiver.

Embodiment 154: A communication apparatus is provided, including a memory, a processor, and a transceiver.

The memory is configured to store computer instructions.

The transceiver is configured to receive and send a message.

The processor is coupled to the memory, and is configured to invoke the computer instructions in the memory, to perform the method according to any one of Embodiments 27 to 53 by using the transceiver.

Embodiment 155: A communication apparatus is provided, including a memory, a processor, and a transceiver.

The memory is configured to store computer instructions.

The transceiver is configured to receive and send a message.

The processor is coupled to the memory, and is configured to invoke the computer instructions in the memory, to perform the method according to any one of Embodiments 54 to 68 by using the transceiver.

Embodiment 156: A communication apparatus is provided, including a memory, a processor, and a transceiver.

The memory is configured to store computer instructions.

The transceiver is configured to receive and send a message.

The processor is coupled to the memory, and is configured to invoke the computer instructions in the memory, to perform the method according to any one of Embodiments 69 to 72 by using the transceiver.

Embodiment 157: A communication apparatus is provided, including a memory, a processor, and a transceiver.

The memory is configured to store computer instructions.

The transceiver is configured to receive and send a message.

The processor is coupled to the memory, and is configured to invoke the computer instructions in the memory, to perform the method according to any one of Embodiments 73 to 76 by using the transceiver.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

Based on the foregoing embodiments, an embodiment of this application provides a communication system. The communication system may include the first terminal device, the first access network device, and the like in the foregoing embodiments.

An embodiment of this application further provides a computer-readable storage medium. The computer-readable storage medium is configured to store a computer program. When the computer program is executed by a computer, the computer may implement the communication method provided in the foregoing method embodiments.

An embodiment of this application further provides a computer program product. The computer program product is configured to store a computer program. When the computer program is executed by a computer, the computer may implement the communication method provided in the foregoing method embodiments.

An embodiment of this application further provides a chip, including a processor. The processor is coupled to a memory, and is configured to invoke a program in the memory, so that the chip implements the communication method provided in the foregoing method embodiments.

An embodiment of this application further provides a chip. The chip is coupled to a memory, and the chip is configured to implement the communication method provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clearly that, a person skilled in the art can make various modifications and variations to this application without departing from the scope of this application. This application is intended to cover these modifications and variations made to this application provided that they fall within the scope of the claims of this application and an equivalent technology thereof.

## Claims

1. A communication method, comprising:
receiving, by a first terminal device, a paging message from a first access network device, wherein the paging message comprises a first identifier, the first identifier is used to identify the paged first terminal device, a bit length of the first identifier is less than a bit length of a second identifier, and the second identifier is a 5th generation-system-temporary subscriber identity 5G-S-TMSI or a radio network temporary identity I-RNTI; and
determining, by the first terminal device based on the first identifier, that the first terminal device is paged.

2. The method according to claim 1, wherein when the first terminal device is in an idle IDLE state, the first identifier is allocated by a core network device to the first terminal device; and
when the first terminal device is in an inactive INACTIVE state, the first identifier is allocated by the core network device.

3. The method according to claim 1, wherein when the first terminal device is in an inactive INACTIVE state, the first identifier is allocated by the first access network device to the first terminal device, or the first identifier is allocated by a second access network device to the first terminal device.

4. The method according to claim 1 or 2, wherein the first identifier is some bits of a 5th generation-temporary subscriber identity 5G-TMSI in the 5G-S-TMSI.

5. The method according to claim 4, wherein that the first identifier is some bits of the 5G-TMSI in the 5G-S-TMSI comprises:
the first identifier is last A bits of the 5G-TMSI;
the first identifier is first B bits of the 5G-TMSI; or
the first identifier is C bits selected from the 5G-TMSI according to a preset rule, wherein
A, B, and C are positive integers less than a quantity of bits of the 5G-TMSI.

6. The method according to any one of claims 1 to 5, wherein the bit length of the first identifier is less than 32.

7. The method according to any one of claims 1 to 6, wherein the bit length of the first identifier is greater than or equal to 12 and less than or equal to 24.

8. The method according to any one of claims 1 to 7, wherein the paging message is a first wake-up radio WUR.

9. The method according to claim 8, wherein the first WUR further comprises first indication information, and the first indication information indicates the bit length of the first identifier, a paging type corresponding to the paging message, or a format of the first WUR.

10. The method according to claim 9, wherein
that the first indication information indicates a format of the first WUR comprises: the first indication information indicates that the first WUR comprises the first identifier; and
that the first indication information indicates a paging type corresponding to the paging message comprises: the first indication information indicates core network paging or access network paging.

11. The method according to any one of claims 1 to 10, wherein receiving, by the first terminal device, the paging message from the first access network device comprises:
receiving, by the first terminal device, the paging message from the first access network device by using a first frequency resource; and
after the determining, by the first terminal device based on the first indication information, that the first terminal device is paged, the method further comprises:
sending, by the first terminal device, a random access preamble sequence preamble to the first access network device by using a second frequency domain resource, wherein the second frequency domain resource is different from the first frequency resource.

12. The method according to any one of claims 1 to 11, wherein the paging message further comprises a third identifier, and the third identifier is used to identify a paged second terminal device.

13. A communication method, comprising:
determining, by a first access network device, a first identifier, wherein the first identifier is used to identify a paged first terminal device, a bit length of the first identifier is less than a bit length of a second identifier, and the second identifier is a 5th generation-system-temporary subscriber identity 5G-S-TMSI or a radio network temporary identity I-RNTI; and
sending, by the first access network device, a paging message to the first terminal device, wherein the paging message comprises the first identifier.

14. The method according to claim 13, wherein when the first terminal device is in an idle IDLE state, determining, by the first access network device, the first identifier comprises:
receiving, by the first access network device, the first identifier from a core network device, wherein the first identifier is allocated by the core network device to the first terminal device; and
when the first terminal device is in an inactive INACTIVE state, determining, by the first access network device, the first identifier comprises:
receiving, by the first access network device, the first identifier from the core network device, wherein the first identifier is allocated by the core network device to the first terminal device; or
receiving, by the first access network device, the first identifier from a second access network device, wherein the first identifier is allocated by the core network device to the first terminal device.

15. The method according to claim 14, wherein when the first terminal device is in the idle IDLE state, the method further comprises:
receiving, by the first access network device, the 5G-S-TMSI from the core network device, wherein the first identifier corresponds to the 5G-S-TMSI, and the bit length of the first identifier is less than a bit length of the 5G-S-TMSI; and
when the first terminal device is in the inactive INACTIVE state, the method further comprises:
receiving, by the first access network device, the 5G-S-TMSI from the core network device; or receiving, by the first access network device, the 5G-S-TMSI from the second access network device, wherein the first identifier corresponds to the 5G-S-TMSI, and the bit length of the first identifier is less than the bit length of the 5G-S-TMSI.

16. The method according to claim 13, wherein when the first terminal device is in an inactive INACTIVE state, determining, by the first access network device, the first identifier comprises:
receiving, by the first access network device, the first identifier from a second access network device, wherein the first identifier is allocated by the second access network device to the first terminal device; or
allocating, by the first access network device, the first identifier to the first terminal device.

17. The method according to claim 16, wherein the method further comprises:
receiving, by the first access network device, the I-RNTI from the second access network device, wherein the first identifier corresponds to the I-RNTI, and the bit length of the first identifier is less than a bit length of the I-RNTI.

18. The method according to any one of claims 13 to 15, wherein the first identifier is some bits of a 5th generation-temporary subscriber identity 5G-TMSI in the 5G-S-TMSI.

19. The method according to claim 18, wherein that the first identifier is some bits of the 5G-TMSI in the 5G-S-TMSI comprises:
the first identifier is last A bits of the 5G-TMSI;
the first identifier is first B bits of the 5G-TMSI; or
the first identifier is C bits selected from the 5G-TMSI according to a preset rule, wherein
A, B, and C are positive integers less than a quantity of bits of the 5G-TMSI.

20. The method according to any one of claims 13 to 19, wherein the bit length of the first identifier is less than 32.

21. The method according to any one of claims 13 to 20, wherein the bit length of the first identifier is greater than or equal to 12 and less than or equal to 24.

22. The method according to any one of claims 13 to 21, wherein the paging message is a first wake-up radio WUR.

23. The method according to claim 22, wherein the first WUR further comprises first indication information, and the first indication information indicates the bit length of the first identifier, a paging type corresponding to the paging message, or a format of the first WUR.

24. The method according to claim 23, wherein
that the first indication information indicates a format of the first WUR comprises: the first indication information indicates that the first WUR comprises the first identifier; and
that the first indication information indicates a paging type corresponding to the paging message comprises: the first indication information indicates core network paging or access network paging.

25. The method according to any one of claims 13 to 24, wherein the sending, by the first access network device, the paging message to the first terminal device comprises:
sending, by the first access network device, the paging message to the first terminal device by using a first frequency resource; and
after the sending, by the first access network device, the paging message to the first terminal device, the method further comprises:
receiving, by the first access network device, a random access preamble sequence preamble from the first terminal device by using a second frequency resource, wherein the second frequency domain resource is different from the first frequency resource.

26. The method according to any one of claims 13 to 25, wherein the paging message further comprises a third identifier, and the third identifier is used to identify a paged second terminal device.

27. A communication apparatus, comprising a memory, a processor, and a transceiver, wherein
the memory is configured to store computer instructions;
the transceiver is configured to receive and send a message; and
the processor is coupled to the memory, and is configured to invoke the computer instructions in the memory, to perform the method according to any one of claims 1 to 12 by using the transceiver.

28. A communication apparatus, comprising a memory, a processor, and a transceiver, wherein
the memory is configured to store computer instructions;
the transceiver is configured to receive and send a message; and
the processor is coupled to the memory, and is configured to invoke the computer instructions in the memory, to perform the method according to any one of claims 13 to 26 by using the transceiver.

29. A computer-readable storage medium, wherein the computer-readable storage medium stores computer-executable instructions, and when the computer-executable instructions are invoked by the computer, the method according to any one of claims 1 to 12 or the method according to any one of claims 13 to 26 is performed.

30. A computer program product, comprising instructions, wherein when the instructions are run on a computer, the method according to any one of claims 1 to 12 or the method according to any one of claims 13 to 26 is performed.

31. A chip, wherein the chip is coupled to a memory, and is configured to read and execute program instructions stored in the memory, to implement the method according to any one of claims 1 to 12 or implement the method according to any one of claims 13 to 26.
